# EUROPÄISCHE PATENTANMELDUNG

(11) **EP 4 194 479 A1**
(43) Veröffentlichungstag der Anmeldung: **14.06.2023**
(21) Anmeldenummer: 21212674.2
(22) Anmeldetag: 07.12.2021
(51) Int. Cl.: C08G 64/00

(54) **GUTE SCHLAGZÄHIGKEIT BEI MECHANISCH RECYCELTEM POLYCARBONAT**

(71) Anmelder: Covestro Deutschland AG, 51373 Leverkusen (DE)
(72) Erfinder: WEHRMANN, Rolf, 51373 Leverkusen (DE); BOUMANS, Anke, 51373 Leverkusen (DE); KLEINEBERG, Henrike, 51373 Leverkusen (DE)
(74) Vertreter: Levpat

(57) **Zusammenfassung**

Die Erfindung betrifft die Verwendung von Alkylphenol-terminiertem Polycarbonat-Primärprodukt zur Verbesserung der Schlagzähigkeit von mechanisch recyceltem Polycarbonat. Diese Eigenschaftsmodifizierung durch Polycarbonat selbst hat den Vorteil, dass die weiteren guten Eigenschaften von Polycarbonat nicht verlorengehen.

## Beschreibung

Die Erfindung betrifft die Verbesserung der Schlagzähigkeit von Polycarbonat-Zusammensetzungen, enthaltend mechanisch recyceltes Polycarbonat.

Thermoplastische Zusammensetzungen sind für eine Vielzahl von Anwendungen geeignet und eine beliebte Materialalternative, da sie gut verarbeitbar sind und vergleichsweise einfach in die unterschiedlichsten Formteile überführt werden können.

Polycarbonat ist dabei ein besonders interessantes Material, da es eine hohe Wärmeformbeständigkeit und eine hohe Zähigkeit bei Raumtemperatur aufweist. Es lässt sich in unterschiedlichsten Materialerscheinungsformen bereitstellen. Je nach Rezepturbestandteilen sind optisch unterschiedlichste Materialien mit breiten Eigenschaftsprofilen hinsichtlich der thermischen, rheologischen und mechanischen Eigenschaften erreichbar. Die Einsatzmöglichkeiten von Polycarbonat sind entsprechend vielfältig, beispielsweise im Beleuchtungsbereich, Automobilbereich, für Schienenfahrzeuge, für 3D-Printing, für den Bausektor, im Bereich Elektro/Elektronik/IT, für Haushaltsgeräte oder im Bereich der Medizintechnik.

Dieses Material findet daher vielfach Anwendung. Im Zuge des Nachhaltigkeitsgedanken besteht entsprechend der Wunsch, Material, basierend auf Polycarbonat, das den Lebenszyklus eines Produktes durchlaufen hat, so zu recyceln, dass es wieder für neue, hochwertige Produkte genutzt werden kann.

Mechanisch recyceltes Polycarbonat weist jedoch immer eine schlechtere Zähigkeit auf als das Ausgangsmaterial, weshalb eine geeignete Lösung zur Verbesserung der Zähigkeit erforderlich ist.

In der Vergangenheit wurde vorgeschlagen, mechanisch recyceltes Polycarbonat aufzuschmelzen und einer neuen Polykondensationsreaktion zuzuführen, so beschrieben etwa in der WO 03/082953 A1 und der US 2003/0229197 A1. Dieses Verfahren ist jedoch unter energetischen Gesichtspunkten im Vergleich zum direkten Einsatz der Recyclate nicht effizient, da es sich um eine Schmelzepolykondensation unter Verwendung von Polycarbonatabfall handelt, bei der auch verzweigte Produkte entstehen. Dabei müssen außerdem die Zusammensetzung und die Menge der zweiten Komponente genau auf die Eigenschaften und Zusammensetzung des Abfalls abgestimmt sein, da andernfalls kein entsprechender neuer Polymeraufbau durch eine Polykondensation möglich ist.

Der Einsatz von Impact Modifiern, klassisch verwendet, um die Zähigkeit von Polycarbonat-Zusammensetzungen noch weiter zu verbessern, ist auch nachteilig, da sich deren Einsatz negativ auf das Brandverhalten auswirkt, eine Eigenschaftsverschlechterung, die vermieden werden sollte. Auch die Vicat-Temperatur sollte möglichst auf einem guten Niveau erhalten bleiben. Beim Einsatz von Impact Modifiern werden opake Zusammensetzungen erhalten. Transparente Einstellungen sind nicht möglich.

Es bestand somit die Aufgabe, mechanisch recyceltes Polycarbonat wieder in ein Material zu überführen, das gute thermische und mechanische Eigenschaften aufweist, d.h. insbesondere eine gute Schlagzähigkeit, möglichst aber auch eine hohe Vicat-Temperatur, weiter bevorzugt auch ein gutes Brandverhalten. Dabei ist besonders zu berücksichtigen, dass die mechanischen und thermischen Eigenschaften von mechanisch recycelten Polycarbonatzusammensetzungen üblicherweise schlechter sind, als bei den entsprechenden Primärprodukten. Unter "Primärprodukten" sind die korrespondierenden, nicht recycelten Polycarbonatzusammensetzungen zu verstehen.

Überraschend hat sich nun gezeigt, das Alkylphenol-terminiertes aromatisches Polycarbonat-Primärprodukt, das mit Polycarbonat-Zusammensetzungen, enthaltend mechanisch recyceltes Polycarbonat, compoundiert wird, genutzt werden kann, um Polycarbonat-Zusammensetzungen, enthaltend mechanisch recyceltes Polycarbonat, wieder solch ein gutes Eigenschaftsprofil zu verleihen. Der Begriff "mechanisch recyceltes Polycarbonat" umfasst dabei Post Consumer Polycarbonat und/oder Post Industrial Polycarbonat.

Gegenstand der Erfindung ist daher die Verwendung von Alkylphenol-terminiertem aromatischem Polycarbonat, und zwar Polycarbonat-Primärprodukt, zur Verbesserung der Schlagzähigkeit von Polycarbonat-Zusammensetzungen, enthaltend mechanisch recyceltes aromatisches Polycarbonat. Bei den Polycarbonat-Zusammensetzungen handelt es sich sowohl um Polycarbonatzusammensetzungen, die ggf. übliche Additive enthalten, wie übliche Stabilisatoren und/oder Verarbeitungshilfsmittel, etwa Thermo- oder UV-Stabilisatoren und/oder Entformungsmittel, als auch um Blendsysteme auf Polycarbonatbasis wie beispielsweise Polycarbonat-SAN-Blends oder Polycarbonat-Polyester-Blends.

Die sich durch die erfindungsgemäße Verwendung ergebende Zusammensetzung enthält bevorzugt
A) 10 bis 80 Gew.-%, weiter bevorzugt 12 bis 55 Gew.-%, noch weiter bevorzugt 15 bis 52 Gew.-%, mechanisch recyceltes Polycarbonat, insbesondere Post Consumer Polycarbonat, mit einer MVR von 2 bis 65 cm³/(10 min), bestimmt nach ISO 1133:2012-03 bei einer Prüftemperatur von 300 °C, Masse 1,2 kg, und
B) 20 bis 90 Gew.-%, weiter bevorzugt 45 bis 88 Gew.-%, noch weiter bevorzugt 48 bis 85 Gew.-%, nicht recyceltes Alkylphenol-terminiertes aromatisches Polycarbonat, also Alkylphenol-terminiertes Polycarbonat-Primärprodukt, mit einer MVR von 2 bis 36 cm³/10 min, weiter bevorzugt 2 bis 24 cm³/(10 min), ganz besonders bevorzugt 6 bis 19 cm³/(10 min), bestimmt nach ISO 1133:2012-03 bei einer Prüftemperatur von 300 °C, Masse 1,2 kg.

Es versteht sich, dass sich die Gew.-%-Angaben auf 100 Gew.-% resultierende Gesamtzusammensetzung beziehen.

Diese Zusammensetzungen werden durch "einfaches" Compoundieren der einzelnen Komponenten erhalten, d.h. die erfindungsgemäße Verwendung umfasst den Schritt des Compoundierens von mechanisch recyceltem Polycarbonat mit Alkylphenol-terminiertem aromatischem Polycarbonat-Primärprodukt, ggf. auch weiterem aromatischem Polycarbonat-Primärprodukt. Bevorzugt sind keine weiteren Schritte erforderlich, insbesondere nicht die Durchführung einer Polymerisationsreaktion.

Die Verbesserung der Schlagzähigkeit ist bezogen auf das mechanisch recycelte Polycarbonat gemäß Komponente A als Referenz. Vergleichszusammensetzung ist somit dieselbe Zusammensetzung wie die, die sich durch die erfindungsgemäße Verwendung ergibt, mit dem Unterschied, dass anstelle der Komponente B entsprechend mehr an Komponente A enthalten ist.

Eine sich durch erfindungsgemäße Verwendung ergebende thermoplastische Zusammensetzung kann neben den Komponenten A und B, ggf. auch weiteres aromatisches Polycarbonat-Primärprodukt, ggf. mit anderer Endgruppe, ein oder mehrere Flammschutzmittel als Komponente C1, ein oder mehrere Antidrippingmittel als Komponente C2 und/oder ein oder mehrere weitere für Polycarbonatzusammensetzungen übliche Additive wie beispielsweise Thermostabilisatoren, Entformungsmittel, Umesterungsinhibitoren oder UV-Absorber als Komponente D enthalten. Hierbei handelt es sich jedoch nur um optionale Komponenten. Komponente D wird zugesetzt, um das Eigenschaftsprofil zu modifizieren. Das mechanisch recycelte Polycarbonat selbst kann bereits übliche Additive enthalten.

Es versteht sich, dass "bis" in Zusammenhang mit Mengenbereichen den jeweils genannten Grenzwert, einschließlich seines Rundungsbereiches, einschließt. Ebenso versteht sich, dass es sich bei den Komponenten auch um Mischungen verschiedener Vertreter der jeweiligen Spezies handeln kann, also z.B. eine Mischung unterschiedlicher mechanisch recycelter Polycarbonate oder eine Mischung unterschiedlicher Alkylphenol-terminierter aromatischer Polycarbonate.

Sofern für eine Komponente, insbesondere die Komponenten A und/oder B, eine Eigenschaft, beispielsweise ein MVR-Wert, angegeben ist, bezieht sich dieser auf die gesamte entsprechende Komponente, also beispielsweise auf die Mischung aus den Komponenten A1 und A2.

Im Rahmen der vorliegenden Erfindung beziehen sich die angegebenen Gew.-% der Komponenten A, B, ggf. C1, ggf. C2, ggf. D - soweit nicht explizit anders angegeben - jeweils auf das Gesamtgewicht der Zusammensetzung. Es versteht sich, dass sämtliche in einer erfindungsgemäßen Zusammensetzung enthaltenen Komponenten zusammen 100 Gew.-% ergeben. Die Zusammensetzung kann neben den Komponenten A, B, C1, C2 und D insbesondere auch einen oder mehrere weitere Thermoplasten als Blendpartner (Komponente E) enthalten, welche durch keine der Komponenten A bis D abgedeckt sind.

Als Blendpartner geeignete, von den Komponenten A bis D verschiedene, thermoplastische Polymere sind beispielsweise Polystyrol, Styrol-Copolymere, aromatische Polyester wie Polyethylenterephthalat (PET) oder Polybutylenterephthalat (PBT), PET-Cyclohexandimethanol-Copolymer (PETG), Polyethylennaphthalat (PEN), Polybutylenterephthalat (PBT), wie PMMA sowie Copolymere mit Styrol wie z.B. transparentes Polystyrolacrylnitril (PSAN), thermoplastische Polyurethane und/oder Polymere auf Basis von zyklischen Olefinen (z.B. TOPAS^{®}, ein Handelsprodukt der Firma Ticona). Bevorzugt werden diese Blendpartner in Konzentrationen von 0,5 Gew.-% bis 10 Gew.-% eingesetzt.

Ganz besonders bevorzugt enthalten die vorbeschriebenen Zusammensetzungen aber keine weiteren Komponenten, sondern die Mengen der Komponenten A, B, ggf. weitere Polycarbonat-Primärprodukt, ggf. C1, ggf. C2, ggf. D, insbesondere in den beschriebenen bevorzugten Ausführungsformen, ergänzen sich zu 100 Gew.-%, d.h. die Zusammensetzungen bestehen aus den Komponenten A, B, ggf. weitere Polycarbonat-Primärprodukt, ggf. C1, ggf. C2, ggf. D.

Es versteht sich, dass die eingesetzten Komponenten übliche Verunreinigungen, die beispielsweise aus ihren Herstellungsprozessen herrühren, enthalten können. Es ist bevorzugt, möglichst reine Komponenten einzusetzen. Es versteht sich weiterhin, dass diese Verunreinigungen auch bei einer geschlossenen Formulierung der Zusammensetzung enthalten sein können.

Unter "Polycarbonat" im erfindungsgemäßen Sinne werden sowohl aromatische Homopolycarbonate als auch aromatische Copolycarbonate verstanden. Dabei können die Polycarbonate in bekannter Weise linear oder verzweigt sein. Diese allgemeinen Eigenschaften gelten gleichermaßen für die Komponenten A und B. Für die Komponente B gilt zusätzlich, dass das Polycarbonat eine Alkylphenol-Endgruppe aufweisen muss.

Die Herstellung der Polycarbonate, die in den Zusammensetzungen enthalten sind, erfolgt in bekannter Weise aus Dihydroxyarylverbindungen, Kohlensäurederivaten, gegebenenfalls Kettenabbrechern und Verzweigern. Dabei können entweder Phasengrenzflächenverfahren oder Schmelzekondensationsverfahren zum Einsatz kommen.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Dihydroxyarylverbindungen mit Kohlensäurehalogeniden, vorzugsweise Phosgen, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1, 1-Bis-(4-hydroxyphenyl)-3,3,5-trimethylcyclohexan, sowie die Bisphenole (I) bis (III) 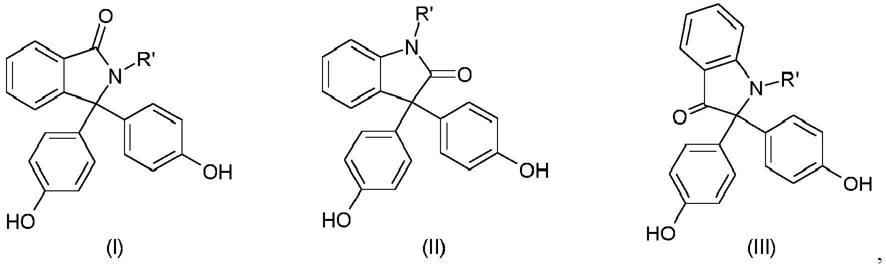 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Bisphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (I), (II) und (III).

Diese und weitere geeignete Dihydroxyarylverbindungen sind z.B. in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, die Copolycarbonate auf Basis von 1,1-Bis-(4-hydroxyphenyl)-3,3,5-trimethylcyclohexan und 4,4'-Dihydroxydiphenyl sowie die Copolycarbonate auf Basis der beiden Monomere Bisphenol A und 1,1-Bis-(4-hydroxyphenyl)-3,3,5-trimethylcyclohexan, sowie von den Dihydroxyarylverbindungen der Formeln (I), (II) und (III) 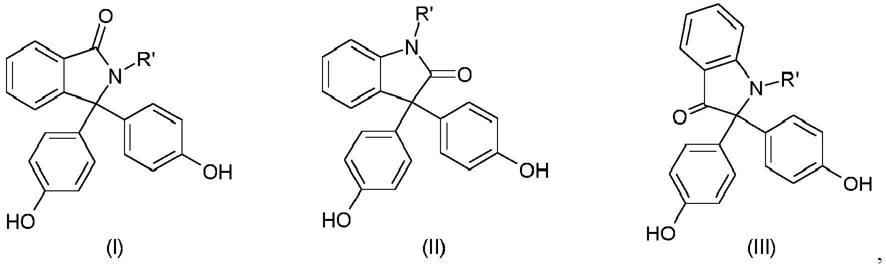 in denen R' jeweils für C₁- bis C₄-Alkyl, Aralkyl oder Aryl, bevorzugt für Methyl oder Phenyl, ganz besonders bevorzugt für Methyl, steht, abgeleitete Homo- oder Copolycarbonate, insbesondere mit Bisphenol A. Ganz besonders bevorzugt wird Bisphenol A basiertes Polycarbonat eingesetzt.

Bevorzugt sind auch Copolycarbonate, zu deren Herstellung Diphenole der allgemeinen Formel (la) eingesetzt wurden: 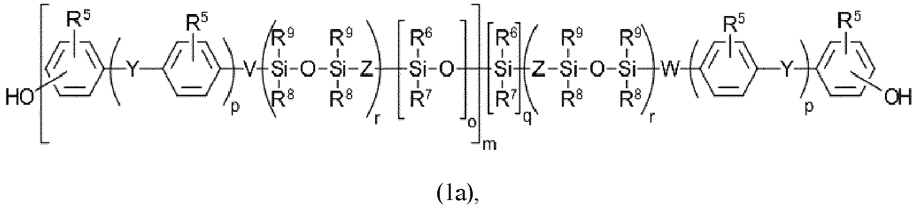 wobei
R⁵ für Wasserstoff oder C₁- bis C₄- Alkyl, C₁- bis C₃-Alkoxy, vorzugsweise für Wasserstoff; Methoxy oder Methyl, steht,
R⁶, R⁷, R⁸ und R⁹ jeweils unabhängig voneinander für C₁- bis C₄-Alkyl oder C₆- bis C₁₂-Aryl, vorzugsweise für Methyl oder Phenyl stehen,
Y für eine Einfachbindung, SO₂-, -S-, -CO-, -O-, C₁- bis C₆-Alkylen, C₂- bis C₅-Alkyliden, C₆- bis C₁₂-Arylen, welches gegebenenfalls mit weiteren Heteroatome enthaltenden aromatischen Ringen kondensiert sein kann oder für einen C₅- bis C₆-Cycloalkylidenrest, der ein- oder mehrfach mit C₁-bis C₄-Alkyl substituiert sein kann, bevorzugt für eine Einfachbindung, -O-, Isopropyliden oder für einen C₅- bis C₆-Cycloalkylidenrest, der ein- oder mehrfach mit C₁- bis C₄-Alkyl substituiert sein kann, steht,
V für Sauerstoff, C₂- bis C₆-Alkylen oder C₃- bis C₆-Alkyliden, bevorzugt für Sauerstoff oder C₃-Alkylen,
p, q und r jeweils unabhängig für 0 oder 1 stehen,
wenn q = 0 ist, W für eine Einfachbindung steht, wenn q = 1 und r = 0 ist, W für Sauerstoff, C₂- bis C₆-Alkylen oder C₃- bis C₆-Alkyliden, bevorzugt für Sauerstoff oder C₃-Alkylen steht,
wenn q = 1 und r = 1 ist, W und V jeweils unabhängig für C₂- bis C₆-Alkylen oder C₃- bis C₆-Alkyliden, bevorzugt C₃-Alkylen steht,
Z für ein C₁- bis C₆-Alkylen, bevorzugt C₂-Alkylen steht, o für eine durchschnittliche Anzahl von Wiederholungseinheiten von 10 bis 500, bevorzugt 10 bis 100 steht, und
m für eine durchschnittliche Anzahl von Wiederholungseinheiten von 1 bis 10, bevorzugt 1 bis 6, weiter bevorzugt 1,5 bis 5 steht. Ebenso ist es möglich, dass Diphenole verwendet werden, in denen zwei oder mehrere Siloxanblöcke der allgemeinen Formel (1a) über Terephthalsäure und/oder Isophthalsäure miteinander unter Ausbildung von Estergruppen verknüpft sind.

Insbesondere bevorzugt sind (Poly)Siloxane der Formeln (2) und (3) 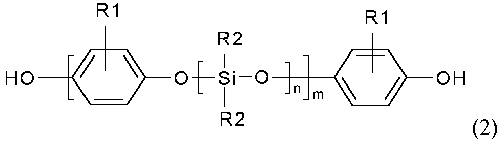 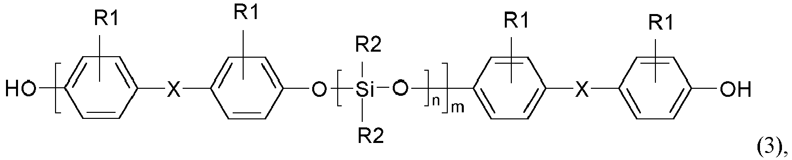 wobei R1 für Wasserstoff, C₁- bis C₄-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht,
X bevorzugt für eine Einfachbindung, C₁- bis C₅-Alkylen, C₂- bis C₅-Alkyliden, C₅- bis C₁₂-Cycloalkyliden, -O-, -SO- -CO-, -S-, -SO₂-, besonders bevorzugt steht X für eine Einfachbindung, Isopropyliden, C₅- bis C₁₂-Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 15 bis 50 bedeutet und
m für eine durchschnittliche Zahl von 1 bis 10, bevorzugt von 1 bis 6 und insbesondere bevorzugt von 1,5 bis 5 steht.

Ebenso bevorzugt kann der Siloxanblock von folgender Struktur abgeleitet sein 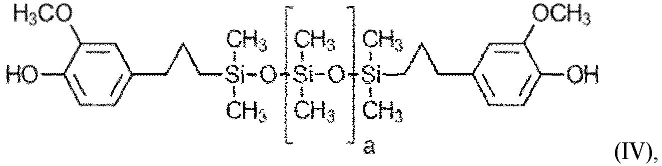 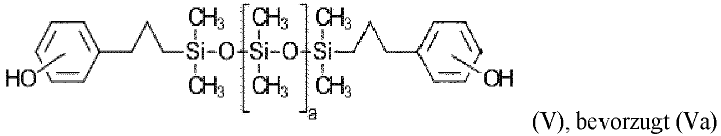 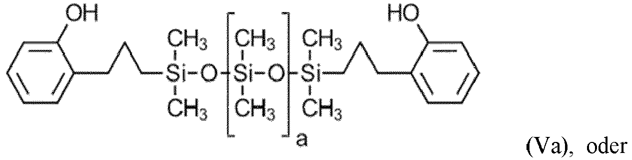 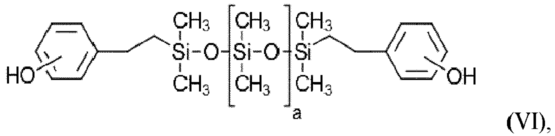 wobei a in Formel (IV), (V) und (VI) für eine durchschnittliche Zahl von 10 bis 400, bevorzugt 10 bis 100 und besonders bevorzugt für 15 bis 50 steht.

Dabei ist es ebenso bevorzugt, dass mindestens zwei gleiche oder verschiedene der Siloxanblöcke der allgemeinen Formeln (IV), (V) oder (VI) über Terephthalsäure und/oder Isophthalsäure miteinander unter Ausbildung von Estergruppen verknüpft sind.

Ebenso ist es bevorzugt, wenn in der Formel (la) p = 0 ist, V für C₃-Alkylen steht, r = 1 ist, Z für C₂-Alkylen steht, R⁸ und R⁹ für Methyl stehen, q = 1 ist, W für C₃-Alkylen steht, m = 1 ist, R⁵ für Wasserstoff oder C₁- bis C₄-Alkyl, vorzugsweise für Wasserstoff oder Methyl, steht, R⁶ und R⁷ jeweils unabhängig voneinander für C₁- bis C₄-Alkyl, vorzugsweise für Methyl stehen und o für 10 bis 500 steht.

Copolycarbonate mit Monomereinheiten der Formel (la) und insbesondere auch deren Herstellung sind in der WO 2015/052106 A2 beschrieben.

Copolycarbonate mit Monomereinheiten der Formel (IV) und insbesondere auch deren Herstellung sind in der WO 2015/052106 A2 beschrieben.

### Komponente A

Die sich durch erfindungsgemäße Verwendung ergebenden Zusammensetzungen enthalten als Komponente A mechanisch recyceltes Polycarbonat (PC). Das in diesem Material enthaltene Polycarbonat ist gewöhnlich aromatisches Polycarbonat. Die Komponente "mechanisch recyceltes Polycarbonat" umfasst neben ihrem Hauptbestandteil, aromatischem Polycarbonat, das bevorzugt in einer Menge von mindestens 80 Gew.-%, weiter bevorzugt mindestens 85 Gew.-%, noch weiter bevorzugt mindestens 90 Gew.-%, besonders bevorzugt mindestens 95 Gew.-%, in dem "mechanisch recycelten Polycarbonat" enthalten ist, auch Additive etc., die Teil der entsprechenden thermoplastischen Zusammensetzung des Ursprungsmaterials sind. Das Recyclingmaterial ist lediglich mechanisch recycelt, d.h. nach Sortierung und ggf. Aufbereitung, z.B. durch Waschen und/oder Abtrennung von Lack-, Farb- und/oder Metallschichten, wird es zerkleinert, aufgeschmolzen und granuliert, d.h. die chemische Struktur des Materials wird nicht wesentlich verändert.

Grundsätzlich kann jedes mechanisch recycelte Polycarbonat verwendet werden.

Bevorzugt ist das mechanisch recycelte Polycarbonat ein Material, das im VIS-Bereich des Spektrums transparent ist, weiter bevorzugt aufweisend eine Lichttransmission im VIS-Bereich des Spektrums (380 bis 780 nm) von mehr als 70 % (Transmissionsgrad T_{VIS}), insbesondere mehr als 80 %, bestimmt nach DIN ISO 13468-2:2006 (D65, 10°, Schichtdicke der Musterplatte: 4 mm), und noch weiter bevorzugt eine Trübung von weniger als 10 %, bestimmt nach ASTM D 1003:2013 bei einer Schichtdicke von 2 mm. Der Transmissionsgrad bezieht sich auf farblos-transparente Zusammensetzungen. Bei eingefärbten transparenten Polycarbonaten kann der Transmissionsgrad abhängig von der Art und der Konzentration der Farbmittel geringer sein.

Bevorzugt wurde das Polycarbonat so recycelt, dass ggf. auf dem Consumerprodukt vorhandene Lackschichten entfernt wurden, was beispielsweise durch Abkratzen oder chemisches Ablösen erfolgt sein kann. "Mechanisch recycelt" bezieht sich lediglich auf das Polycarbonat-Material an sich, daher auch "mechanisch recyceltes Polycarbonat"; die vorausgehende Abtrennung anderer Materialien auf Basis anderer Thermoplasten, von Lackschichten etc. ist hierdurch nicht erfasst und geschieht nötigenfalls vorab in Vorbereitung des mechanischen Recyclings. Es versteht sich, dass ein Ablösen der einen oder mehreren Lackschicht(en) vollständig erfolgt sein kann oder aber auch noch an dem Polycarbonat gemäß Komponente A kleinere Mengen Lackschicht(en) anhaften können. Weiter bevorzugt beträgt der Anteil ggf. noch vorhandenen Lacks weniger als 1 Gew.-%, noch weiter bevorzugt weniger als 0,2 Gew.-%, ganz besonders bevorzugt 0 Gew.-%, also ist gar kein Lackanteil mehr vorhanden, wobei sich die Mengenangaben auf das Gesamtgewicht des als "Komponente A" bezeichneten mechanisch recycelten Polycarbonats beziehen. Ebenso besonders bevorzugt ist auch kein sonstiges Material außer Polycarbonatmaterial Teil der Komponente A.

Bei dem mechanisch recycelten Polycarbonat handelt es sich bevorzugt um recyceltes Wasserflaschenmaterial, recyceltes Gehäusematerial, recyceltes Profil- Platten- oder Folienmaterial, recycelte Schokoladenformen, recyceltes optisches Datenträgermaterial, Angussmaterialien, z. B. vom Linsenspritzguss, recyceltes Lampen- oder Scheinwerferabdeckungsmaterial, recyceltes Linsen- oder Brillenmaterial, recycelte (Automobil-)Scheinwerfermaterial, recyceltes Medicalproduktmaterial wie von Dialysatorgehäusen, Luer-Systemen, Hähnen, Tuben oder Verbindungsstücken, oder eine Mischung von zwei oder mehr hiervon.

Das mechanisch recycelte Polycarbonat ist in den sich durch die erfindungsgemäße Verwendung ergebenden Zusammensetzungen bevorzugt in Mengen von 10 bis 80 Gew.-%, weiter bevorzugt in Mengen von 12 bis 55 Gew.-%, besonders bevorzugt in Mengen von 15 bis 52 Gew.-%, enthalten.

Der MVR-Wert des mechanisch recycelten Polycarbonats beträgt bevorzugt 2 bis 65 cm³/(10 min), weiter bevorzugt 2 bis 50 cm³/(10 min), weiter bevorzugt 3 bis 36 cm³/(10 min), besonders bevorzugt 4 bis 9 cm³/(10 min), bestimmt nach ISO 1133:2012-03 bei einer Prüftemperatur von 300 °C und einer Masse von 1,2 kg.

### Komponente B

Die erfindungsgemäßen Zusammensetzungen enthalten als Komponente B Alkylphenol-terminiertes aromatisches Polycarbonat. Es handelt sich hierbei um entsprechendes Polycarbonat, das nicht aus der Komponente A, dem mechanisch recycelten Polycarbonat, stammt. Im Gegensatz zu Komponente A ist Komponente B Primärprodukt, also "frisches"/ nicht recyceltes Polycarbonat.

Die Verwendung von Alkylphenolen als Kettenabbrecher ist bekannt und z.B. in WO 2004/063249 A1 beschrieben.

Das Alkylphenol-terminierte aromatische Polycarbonat gemäß Komponente B ist bevorzugt im kontinuierlichen Phasengrenzflächenprozess ("Konti-Verfahren") hergestellt, wobei weiter bevorzugt Aufarbeitung und Isolierung des Polycarbonats mit Hilfe von Hochviskos-Technologien wie Ausdampfextruder und/oder Strangverdampfer erfolgen, wobei besonders bevorzugt p-tert.Butylphenol und/oder n-Butylphenol als Kettenabbrecher eingesetzt werden.

Das aromatische Polycarbonat gemäß Komponente B ist bevorzugt im VIS-Bereich des Spektrums transparent. Weiter bevorzugt bedeutet "Transparenz" in diesem Zusammenhang, dass das Alkylphenol-terminierte aromatische Polycarbonat eine Lichttransmission im VIS-Bereich des Spektrums (380 bis 780 nm) von mehr als 80 % (Transmissionsgrad T_{VIS}), noch weiter bevorzugt von mehr als 83 %, bestimmt nach DIN ISO 13468-2:2006 (D65, 10°, Schichtdicke der Musterplatte: 4 mm), und besonders bevorzugt eine Trübung von weniger als 10 %, bestimmt nach ASTM D1003:2013 bei einer Schichtdicke von 2 mm, aufweist.

Der MVR des nicht recycelten Alkylphenol-terminierten aromatischen Polycarbonats beträgt bevorzugt 2 bis 36 cm³/(10 min), weiter bevorzugt 2 bis 24 cm³/(10 min), besonders bevorzugt 6 bis 19 cm³/(10 min), bestimmt nach ISO 1133:2012-03, bei einer Prüftemperatur von 300 °C und einer Masse von 1,2 kg.

Die thermoplastischen Polycarbonate einschließlich der thermoplastischen, aromatischen Polyestercarbonate haben bevorzugt gewichtsmittlere Molekulargewichte M_{w} von 19.000 g/mol bis 40.000 g/mol, weiter bevorzugt von 20.000 g/mol bis 34.000 g/mol, besonders bevorzugt von 22.000 g/mol bis 33.000 g/mol, insbesondere von 22.000 g/mol bis 32.000 g/mol, ermittelt durch Gelpermeationschromotographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Verwendung einer UV- und/oder RI-Detektion.

Die thermoplastischen erfindungsgemäßen Zusammensetzungen enthalten als Komponente B bevorzugt 20 bis 90 Gew.-%, weiter bevorzugt 45 bis 88 Gew.-%, noch weiter bevorzugt 48 bis 85 Gew.-%, nicht recyceltes Alkylphenol-terminiertes aromatisches Polycarbonat, also Alkylphenol-terminiertes aromatisches Polycarbonat-Primärprodukt, bezogen auf die Gesamtzusammensetzung.

### Komponente C1 und Komponente C2

Die sich durch die erfindungsgemäße Verwendung ergebenden Zusammensetzungen können extra hinzugefügte Flammschutzmittel und/oder Antidrippingmittel, ggf. neben solchen, die durch die Komponente A eingebracht sind, enthalten. Die Komponenten C1 und C2 als aktiv und bewusst hinzugesetzte Flammschutzmittel bzw. Antidrippingmittel umfassen mengenmäßig nicht das, was als Flammschutzmittel bzw. Antidrippingmittel möglicherweise durch die Komponente A, in die Zusammensetzung eingebracht wird. Bevorzugt wird ein Flammschutzpaket aus den Komponenten C1 und C2 zugesetzt, da ein Großteil der möglichen Anwendungsbereiche der thermoplastischen Zusammensetzungen auf Basis von mechanisch recyceltem Polycarbonat in Anwendungsfeldern liegt, welche gute Brandschutzeigenschaften erfordern wie etwa im Bereich der Gehäuse oder Gehäuseteile für EE-Geräte.

Die optional enthaltene Komponente C1 sind Flammschutzmittel. Bevorzugt sind diese ausgewählt aus der Gruppe der Alkali-, Erdalkali- oder Ammoniumsalze von aliphatischen oder aromatischen Sulfonsäure-, Sulfonamid- oder Sulfonimidderivaten und Kombinationen aus diesen. "Kombinationen aus diesen" sind zwei oder mehr solcher Flammschutzmittel, aber auch zwei oder mehrere Vertreter einer der genannten Verbindungsgruppen.

Unter "Derivaten" werden erfindungsgemäß an dieser und anderer Stelle solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Besonders bevorzugt umfassen erfindungsgemäße Zusammensetzungen als Flammschutzmittel ein oder mehrere Verbindungen, ausgewählt aus der Gruppe, bestehend aus Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliumdiphenylsulfonsulfonat, Natrium- oder Kalium-2-formylbenzolsulfonat, Natrium- oder Kalium-(N-benzolsulfonyl)-benzolsulfonamid oder deren Mischungen.

Bevorzugt werden Natrium- oder Kaliumperfluorbutansulfat, Natrium- oder Kaliumperfluoroctansulfat, Natrium- oder Kaliumdiphenylsulfonsulfonat oder deren Mischungen eingesetzt. Ganz besonders bevorzugt ist Kaliumperfluor-1-butansulfonat, welches kommerziell erhältlich ist, unter anderem als Bayowet^{®} C4 von der Firma Lanxess, Leverkusen, Deutschland.

Die Mengen von Alkali-, Erdalkali- und/oder Ammoniumsalzen von aliphatischen bzw. aromatischen Sulfonsäure-, Sulfonamid- und Sulfonimidderivaten in der Zusammensetzung, sofern diese als Komponente C1 neben den Komponenten A und B hinzugefügt wurden, betragen 0,02 Gew.-% bis 0,15 Gew.-%, bevorzugt 0,04 Gew.-% bis 0,12 Gew.-%, besonders bevorzugt 0,05 Gew.-% bis 0,10 Gew.-% und ganz besonders bevorzugt 0,065 Gew.-% bis 0,08 Gew.-%.

Die sich durch die erfindungsgemäße Verwendung ergebenden Zusammensetzungen können als Komponente C2 ein neben den Komponenten A und B hinzugefügtes Antitropfmittel enthalten, wobei es sich um eine Mischung mehrerer Antitropfmittel handeln kann. Die Menge an Antitropfmittel (Antidrippingmittel) insgesamt, sofern ein solches enthalten ist, beträgt vorzugsweise 0,1 Gew.-% bis 0,8 Gew.-%, insbesondere 0,10 Gew.-% bis 0,8 Gew.-%, weiter bevorzugt 0,15 Gew.-% bis 0,7 Gew.-%, besonders bevorzugt 0,4 Gew.-% bis 0,6 Gew.-% mindestens eines Antitropfmittels.

Bevorzugt wird als Antidrippingmittel fluorhaltiges Polymer, insbesondere Polyolefin, eingesetzt.

Die als Antidrippingmittel insbesondere bevorzugt eingesetzten fluorierten Polyolefine sind hochmolekular und besitzen Glasübergangstemperaturen von über -30°C, in der Regel von über 100°C, Fluorgehalte vorzugsweise von 65 Gew.-% bis 76 Gew.-%, insbesondere von 70 bis 76 Gew.-%. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. Nähere Einzelheiten sind z.B. in US-A 2 393 967 beschrieben.

Je nach Einsatzform kann die Dichte der fluorierten Polyolefine zwischen 1,2 und 2,3 g/cm³, bevorzugt 2,0 g/cm³ bis 2,3 g/cm³, bestimmt nach ISO 1183-1 (2019-09), die mittlere Teilchengröße zwischen 0,05 und 1000 µm, bestimmt mittels Lichtmikroskopie oder Weißlichtinterferometrie, liegen.

Geeignete Tetrafluorethylenpolymerisat-Pulver sind handelsübliche Produkte und werden beispielsweise von der Firma DuPont unter dem Handelsnamen Teflon^{®} angeboten.

Besonders bevorzugt wird Polytetrafluorethylen (PTFE) oder eine PTFE-haltige Zusammensetzung eingesetzt. PTFE ist in diversen Produktqualitäten kommerziell verfügbar. Hierzu zählen Hostaflon^{®} TF2021 oder aber PTFE-Blends wie Blendex^{®} B449 (ca. 50 Gew.-% PTFE und ca. 50 Gew.-% SAN [aus 80 Gew.-% Styrol und 20 Gew.-% Acrylnitril]) der Firma Chemtura. Bevorzugt wird Blendex^{®} B449 verwendet.

### Komponente D

Die sich durch die erfindungsgemäße Verwendung ergebenden Zusammensetzungen können ein oder mehrere von den Komponente C1 und Komponente C2 verschiedene, weitere Additive enthalten, welche vorliegend unter "Komponente D" zusammengefasst sind. Die Komponenten D umfassen nicht die möglicherweise als Teil von Komponente A in die Zusammensetzung eingebrachten Additive, d.h. die jeweiligen Mengen.

Es sind optional (0 Gew.-%) bis 20 Gew.-%, weiter bevorzugt bis 10 Gew.-%, noch weiter bevorzugt 0,1 Gew.-% bis 6,0 Gew.-%, besonders bevorzugt 0,1 Gew.-% bis 3,0 Gew.-%, ganz besonders bevorzugt 0,2 Gew.-% bis 1,0 Gew.-%, insbesondere bis 0,5 Gew.-% sonstige übliche Additive ("weitere Additive") enthalten, wobei sich diese Gewichtsprozente auf das Gesamtgewicht der Zusammensetzung beziehen. Die Gruppe der weiteren Additive umfasst keine Flammschutzmittel und Antidrippingmittel, da diese bereits als Komponente C1 bzw. C2 beschrieben sind.

Solche weiteren Additive, wie sie üblicherweise Polycarbonaten zugesetzt werden, sind insbesondere Thermostabilisatoren, Antioxidantien, Entformungsmittel, UV-Absorber, IR-Absorber, Schlagzähmodifikatoren, Antistatika, optische Aufheller, Lichtstreumittel, Hydrolysestabilisatoren, Umesterungsinhibitoren, (organische) Farbstoffe, (organische/anorganische) Pigmente und/oder Additive zur Lasermarkierung, insbesondere in den für Polycarbonat-basierte Zusammensetzungen üblichen Mengen. Derartige Additive sind beispielsweise in EP 0 839 623 A1, WO 96/15102 A1, EP 0 500 496 A1 oder im "Plastics Additives Handbook", Hans Zweifel, 5th Edition 2000, Hanser Verlag, München beschrieben. Diese Additive können einzeln oder auch im Gemisch zugesetzt werden.

Bevorzugt sind die weiteren Additive ausgewählt aus der Gruppe der Thermostabilisatoren, Antioxidantien, Entformungsmittel, UV-Absorber, IR-Absorber, Schlagzähmodifikatoren, Antistatika, optischen Aufheller, Füllstoffe, Lichtstreumittel, Hydrolysestabilisatoren, Umesterungsinhibitoren, Verträglichkeitsvermittler und/oder Additive zur Lasermarkierung.

Ganz besonders bevorzugt enthalten die Zusammensetzungen als weiteres Additiv gemäß Komponente D mindestens einen Thermostabilisator. Es versteht sich, dass das mechanisch recycelte Polycarbonat gemäß Komponente A selbst bereits übliche Additive enthalten kann, die sich dann in der Zusammensetzung wiederfinden und eben über die Komponente A in die thermoplastische Polycarbonatzusammensetzung eingebracht werden. Sofern aber eine gezielte Additivierung gewünscht ist, sind solche bewusst separat durch das mechanisch recycelte Polycarbonat, insbesondere das Post Consumer oder Post Industrial Polycarbonat eingebrachten Additive als Komponente D bzw. Flammschutzmittel als Komponente C1 oder Antidrippingmittel als Komponente C2 erfasst.

Als Thermostabilisatoren sind insbesondere Phosphor-basierte Stabilisatoren, ausgewählt aus der Gruppe der Phosphate, Phosphite, Phosphonite, Phosphine und deren Mischungen, geeignet. Es können auch Mischungen von verschiedenen Verbindungen aus einer dieser Untergruppen eingesetzt werden, z.B. zwei Phosphite. Als Thermostabilisatoren werden bevorzugt Phosphor-Verbindungen mit der Oxidationszahl +III, insbesondere Phosphine und/oder Phosphite, eingesetzt. Als Thermostabilisatoren eignen sich besonders bevorzugt Triphenylphosphin, Tris-(2,4-di-tert-butylphenyl)phosphit (Irgafos^{®} 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox^{®} 1076), Bis-(2,4-dicumylphenyl)-pentaerythritoldiphosphit (Doverphos^{®} S-9228), Bis-(2,6-di-tert-butyl-4-methylphenyl)-pentaerythritoldiphosphit (ADK STAB PEP-36). Sie werden allein oder im Gemisch, z. B. Irganox^{®} B900 (Gemisch aus Irgafos^{®} 168 und Irganox^{®} 1076 im Verhältnis 4:1) oder Doveiphos^{®} S-9228 mit Irganox^{®} B900 bzw. Irganox^{®} 1076, eingesetzt. Die Thermostabilisatoren werden bevorzugt in Mengen bis zu 1,0 Gew.-%, weiter bevorzugt 0,003 Gew.-% bis 1,0 Gew.-%, noch weiter bevorzugt 0,005 Gew.-% bis 0,5 Gew.-%, besonders bevorzugt 0,01 Gew.-% bis 0,2 Gew.-%, eingesetzt.

Bevorzugte Additive sind auch spezielle UV-Absorber, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate sowie Oxaldianilide. Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF SE, Ludwigshafen), 2-(2'-Hydroxy-5'-(tert.-octyl)-phenyl)-benzotriazol (Tinuvin^{®} 329, BASF SE, Ludwigshafen), Bis-(3-(2H-benztriazolyl)-2-hydroxy-5-tert.-octyl)methan (Tinuvin^{®} 360, BASF SE, Ludwigshafen), 2-(4,6-Diphenyl-1,3,5-triazin-2-yl)-5-(hexyloxy)-phenol (Tinuvin^{®} 1577, BASF SE, Ludwigshafen), 2-(Schloro-2H-benzotriazol-2-yl)-6-(1,1-dimethylethyl)-4-methyl-phenol (Tinuvin^{®} 326, BASF SE, Ludwigshafen), sowie Benzophenone wie 2,4-Dihydroxybenzophenon (Chimasorb^{®} 22 , BASF SE, Ludwigshafen) und 2-Hydroxy-4-(octyloxy)-benzophenon (Chimassorb^{®} 81, BASF SE, Ludwigshafen), 2,2-Bis[[(2-cyano-1-oxo-3,3-diphenyl-2-propenyl)oxy]-methyl]-1,3-propandiylester (9CI) (Uvinul 3030, BASF SE, Ludwigshafen), 2-[2-Hydroxy-4-(2-ethylhexyl)oxy]phenyl-4,6-di(4-phenyl)phenyl-1,3,5-triazine (Tinuvin^{®} 1600, BASF SE, Ludwigshafen), Tetraethyl-2,2'-(1,4-phenylen-dimethyliden)-bismalonat (Hostavin B-Cap, Clariant AG) oder N-(2-Ethoxyphenyl)-N'-(2-ethylphenyl)-ethandiamid (Tinuvin^{®} 312, CAS-Nr. 23949-66-8, BASF SE, Ludwigshafen).

Besonders bevorzugte spezielle UV-Absorber sind Tinuvin^{®} 360, Tinuvin^{®} 329, Tinuvin^{®} 326, Tinuvin^{®} 1600, Tinuvin^{®} 312, Uvinul^{®} 3030 und/oder Hostavin B-Cap, ganz besonders bevorzugt sind Tinuvin^{®} 329 und Tinuvin^{®} 360.

Es können auch Mischungen der genannten Ultraviolett-Absorber eingesetzt werden.

Sofern UV-Absorber enthalten sind, enthält die Zusammensetzung bevorzugt Ultraviolett-Absorber in einer Menge bis 0,8 Gew.-%, bevorzugt 0,05 Gew.-% bis 0,5 Gew.-%, weiter bevorzugt 0,08 Gew.-% bis 0,4 Gew.-%, ganz besonders bevorzugt 0,1 Gew.-% bis 0,35 Gew.-%, bezogen auf die Gesamtzusammensetzung.

Die Zusammensetzungen können auch Phosphate oder Sulfonsäureester als Umesterungsinhibitoren enthalten. Bevorzugt ist Triisooctylphosphat als Umesterungsinhibitor enthalten. Triisooctylphosphat wird bevorzugt in Mengen von 0,003 Gew.-% bis 0,05 Gew.-%, weiter bevorzugt 0,005 Gew.-% bis 0,04 Gew.-% und besonders bevorzugt von 0,01 Gew.-% bis 0,03 Gew.-%, bezogen auf die Gesamtzusammensetzung, eingesetzt.

Die Zusammensetzungen können grundsätzlich außerdem Fließverbesserer, z.B. Diglycerolester oder Diglycerolester/Carbonsäure-Gemische, enthalten.

Beispiele für Schlagzähmodifikatoren sind: Kern-Schale-Polymerisate wie ABS oder MBS; Olefin-Acrylat-Copolymere wie z. B. Elvaloy^{®}-Typen von DuPont oder Paraloid^{®}-Typen von Dow; Siliconacrylatkautschuke wie z. B. die Metablen^{®}-Typen von Mitsubishi Rayon Co., Ltd.

Füllstoffe können ebenfalls zugesetzt werden. Diese können z.B. partikel-, schuppenförmigen oder faserförmigen Charakter haben. Beispielhaft seien an dieser Stelle Kreide, Bariumsulfat, Silikate/Aluminosilikate wie z.B. Wollastonit, Glimmer/Tonschichtmineralien, Montmorillonit, insbesondere auch in einer durch Ionenaustausch modifizierten, organophilen Form, Kaolin, Zeolithe, Vermiculit, Glasfasern, Carbonfasern, genannt. Es können auch Mischungen verschiedener anorganischer Materialien zum Einsatz kommen.

Die Polycarbonat-Zusammensetzungen können zudem andere Polymere wie SAN oder Polyester enthalten, so dass Blendsysteme auf Polycarbonatbasis mit diesen Polymeren erhalten werden.

Die Herstellung der thermoplastischen Zusammensetzungen, enthaltend die Komponenten A und B, ggf. weiteres Polycarbonat-Primärprodukt, ggf. Blendpartner, ggf. C und/oder D mit dem Ziel der erfindungsgemäßen Verwendung, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen. Es können auch Vormischungen aus Granulaten oder Granulaten und Pulvern mit den Komponenten C und/oder D verwendet werden. Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind. Insbesondere können die als Komponente D bezeichneten Additive sowie die Komponenten C1 und C2 durch bekannte Verfahren oder als Masterbatch in das Polycarbonat, ggf. in das Polycarbonat mit Blendpartner, eingebracht werden. Die Verwendung von Masterbatchen ist insbesondere zum Einbringen von Additiven und weiteren Bestandteilen bevorzugt, wobei insbesondere Masterbatche auf Basis der jeweiligen Polymermatrix verwendet werden.

In diesem Zusammenhang kann die thermoplastische Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die thermoplastischen Zusammensetzungen können auf üblichen Maschinen, beispielsweise auf Extrudern oder Spritzgussmaschinen, zu beliebigen Formkörpern, wie beispielsweise Folien, Platten, Profilen, Rohren oder Flaschen, in üblicher Weise verarbeitet werden. Dabei ist das Ziel, dass die erfindungsgemäßen Zusammensetzungen so weit wie möglich das technische Eigenschaftsniveau von Zusammensetzungen erreichen, die keine mechanisch recyclierten Anteile enthalten.

Somit sind die sich bei erfindungsgemäßer Verwendung ergebenden Zusammensetzungen geeignet für die Herstellung von Straßenlampengehäusen, Schalterschränken und Gehäusen für elektrische Anlagen und Bauteile, Batterieladestationen, Automobilaußen- und Innenteile wie Streuscheiben oder Blinkerabdeckungen. Weitere Anwendungen sind Anwendungen in der E/E&A-Industrie wie Schalter, Gehäuse, Computergehäuse, Laptopgehäuse und -deckel, Displayabdeckungen, Extrusionsanwendungen wie Platten, Rohre, Profile, Filamente, Pulver und/oder Granulate für 3D-Printing. Entsprechende Formteile aus sich bei erfindungsgemäßer Verwendung ergebenden Zusammensetzungen, auch mit entsprechenden als bevorzugt, weiter bevorzugt etc. für die erfindungsgemäße Verwendung angegebenen Merkmalen, sind ebenfalls Gegenstand der vorliegenden Erfindung.

Diese und sonstige Formteile, bestehend aus den thermoplastischen Zusammensetzungen oder umfassend - z.B. bei Mehrkomponentenspritzguss - diese, einschließlich der Formteile, die eine Schicht eines Mehrschichtsystems bzw. ein Element eines oben genannten Bauteils darstellen oder ein solches Bauteil sind, aus ("bestehend aus") diesen thermoplastischen Zusammensetzungen, sind ebenfalls Gegenstand dieser Anmeldung.

Die nachfolgenden Beispiele sollen die Erfindung illustrieren, ohne sie jedoch einzuschränken.

### Beispiele

### 1. Beschreibung der Rohstoffe und Prüfmethoden

Die in den folgenden Beispielen beschriebenen Polycarbonat-basierten Zusammensetzungen wurden auf einem Extruder ZE 25 der Fa. Berstorff mit einem Durchsatz von 10 kg/h durch Compoundierung hergestellt. Die Schmelzetemperatur betrug 275 °C.

### a) Rohstoffe

Soweit nicht anders angegeben, handelt es sich bei dem nachfolgend beschriebenen eingesetzten Polycarbonat um Polycarbonat-Primärprodukt, also "frisches", nicht recyceltes Polycarbonat. Das transparente mechanisch recycelte Polycarbonat hatte jeweils eine Lichttransmission im VIS-Bereich des Spektrums (380 bis 780 nm) von mehr als 70 % (Transmissionsgrad T_{VIS}), bestimmt nach DIN ISO 13468-2:2006 (D65, 10°, Schichtdicke der Musterplatte: 4 mm), und eine Trübung von weniger als 10 %, bestimmt nach ASTM D1003:2013 bei einer Schichtdicke von 2 mm.

**Komponente A-1:** Mechanisch recyceltes PC auf Basis von linearem transparenten Polycarbonat auf Basis von Bisphenol A mit einer Schmelze-Volumenfließrate MVR von 7 cm³/(10 min) (gemäß ISO 1133:2012-03, bei einer Prüftemperatur von 300°C und 1,2 kg Belastung), kommerziell erhältlich von der Firma Krall Kunststoff-Recycling GmbH, Elsenfeld, Deutschland.

**Komponente A-2:** Mechanisch recyceltes PC auf Basis von linearem transparenten Polycarbonat auf Basis von Bisphenol A mit einer Schmelze-Volumenfließrate MVR von 7,5 cm³/(10 min) (gemäß ISO 1133:2012-03, bei einer Prüftemperatur von 300°C und 1,2 kg Belastung), kommerziell erhältlich von der Firma Heathland B. V., Utrecht, Niederlande.

**Komponente A-3:** Mechanisch recyceltes PC auf Basis von verzweigtem transparenten Polycarbonat auf Basis von Bisphenol A mit einer Schmelze-Volumenfließrate MVR von 4 cm³/(10 min) (gemäß ISO 1133:2012-03, bei einer Prüftemperatur von 300°C und 1,2 kg Belastung), kommerziell erhältlich von der Firma Bage Plastics GmbH, St. Marien, Österreich.

**Komponente A-4:** Mechanisch recyceltes PC auf Basis von linearem transparenten Polycarbonat auf Basis von Bisphenol A mit einer Schmelze-Volumenfließrate MVR von 6,2 cm³/(10 min) (gemäß ISO 1133:2012-03, bei einer Prüftemperatur von 300°C und 1,2 kg Belastung), kommerziell erhältlich von der Firma Heathland B. V., Utrecht, Niederlande.

**Komponente A-5:** Mechanisch recyceltes PC auf Basis von linearem transparenten Polycarbonat auf Basis von Bisphenol A mit einer Schmelze-Volumenfließrate MVR von 20,9 cm³/(10 min) (gemäß ISO 1133:2012-03, bei einer Prüftemperatur von 300°C und 1,2 kg Belastung), kommerziell erhältlich von der Firma Heathland B. V., Utrecht, Niederlande. Das Material wurde aus einem mechanisch zerkleinerten Automobilscheinwerfer erhalten.

**Komponente B-1:** Lineares Polycarbonat auf Basis von Bisphenol A mit tert.-Butylphenolendgruppe mit einer Schmelze-Volumenfließrate MVR von 12 cm³/(10 min) (gemäß ISO 1133:2012-03, bei einer Prüftemperatur 300°C und 1,2 kg Belastung), enthaltend 250 ppm Triphenylphosphin als Komponente **B-3** (nicht separat in den Tabellen aufgeführt).

**Komponente B-2:** Lineares Polycarbonat auf Basis von Bisphenol A mit tert.-Butylphenolendgruppe mit einer Schmelze-Volumenfließrate MVR von 6 cm³/(10 min) (gemäß ISO 1133:2012-03, bei einer Prüftemperatur von 300°C und 1,2 kg Belastung).

**Komponente B-3*:** Lineares Polycarbonat auf Basis von Bisphenol A mit Phenolendgruppe mit einer Schmelze-Volumenfließrate MVR von 9,5 cm³/(10 min) (gemäß ISO 1133:2012-03, bei einer Prüftemperatur von 300°C und 1,2 kg Belastung), enthaltend 250 ppm Triphenylphosphin als Komponente **D-3** (nicht separat in den Tabellen aufgeführt). "^{∗}" steht hier und nachfolgend für keine erfindungsgemäße Komponente B.

**Komponente B-4*:** Lineares Polycarbonat auf Basis von Bisphenol A mit Phenolendgruppe mit einer Schmelze-Volumenfließrate MVR von 6 cm³/(10 min) (gemäß ISO 1133:2012-03, bei einer Prüftemperatur von 300°C und 1,2 kg Belastung), enthaltend 250 ppm Triphenylphosphin als Komponente **D-3** (nicht separat in den Tabellen aufgeführt).

**Komponente B-5*:** Lineares Polycarbonat auf Basis von Bisphenol A mit Phenolendgruppe mit einer Schmelze-Volumenfließrate MVR von 12 cm³/(10 min) (gemäß ISO 1133:2012-03, bei einer Prüftemperatur von 300°C und 1,2 kg Belastung), enthaltend 250 ppm Triphenylphosphin als Komponente **D-3** (nicht separat in den Tabellen aufgeführt).

**Komponente B-6:** Lineares Polycarbonat in Pulverform auf Basis von Bisphenol A mit einer tert.-Butylphenolendgruppe mit einer Schmelze-Volumenfließrate MVR von 19 cm³/(10 min) (gemäß ISO 1133:2012-03, bei einer Prüftemperatur von 300°C und 1,2 kg Belastung).

**Komponente B-7*:** Lineares Polycarbonat in Pulverform auf Basis von Bisphenol A mit einer Phenolendgruppe mit einer Schmelze-Volumenfließrate MVR von 6 cm³/(10 min) (gemäß ISO 1133:2012-03, bei einer Prüftemperatur von 300°C und 1,2 kg Belastung).

**Komponente B-8:** Verzweigtes Polycarbonat auf Basis von Bisphenol A mit einer tert.-Butylphenolendgruppe mit einer Schmelze-Volumenfließrate MVR von 2 cm³/(10 min) (gemäß ISO 1133:2012-03, bei einer Prüftemperatur von 300°C und 1,2 kg Belastung).

**Komponente B-9:** Lineares Polycarbonat auf Basis von Bisphenol A mit einer tert.-Butylphenolendgruppe mit einer Schmelze-Volumenfließrate MVR von 19 cm³/(10 min) (gemäß ISO 1133:2012-03, bei einer Prüftemperatur von 300°C und 1,2 kg Belastung). Die Komponente B-9 enthält neben dem Polycarbonat als Komponente B Triphenylphosphin als Komponente D-3, UV-Absorber und Entformungsmittel als weitere Additive D.

**Komponente C-1:** Kaliumperfluor-1-butansulfonat, kommerziell erhältlich als Bayowet^{®} C4 der Firma Lanxess AG, Leverkusen, Deutschland, CAS-Nr. 29420-49-3.

**Komponente C-2:** Blendex^{®} B449 (ca. 50 Gew.-% PTFE und ca. 50 Gew.-% SAN [aus 80 Gew.-% Styrol und 20 Gew.-% Acrylnitril]), kommerziell erhältlich bei der Firma Chemtura Corporation. Antitropfmittel.

**Komponente C-3:** Octaphenylcyclotetrasiloxan der Firma Firma Shin-Etsu Silicones, Japan.

**Komponente D-1:** Entformungsmittel PETS (Pentaerythrittetrastearat) der Firma Emery Oleochemicals.

**Komponente D-2:** Tinuvin 329, UV-Stabilisator mit Benzotriazolstruktur, kommerziell erhältlich bei der BASF SE, Ludwigshafen.

**Komponente D-3:** Triphenylphosphin, kommerziell erhältlich bei der BASF SE, Ludwigshafen.

**Komponente D-4:** Triisooctylphosphat, kommerziell erhältlich bei der Lanxess AG, Leverkusen.

**Komponente D-5:** Paraloid EXL2300, kommerziell erhältlich bei der Firma Dow. Acrylisches Kern/Schale-Pfropfpolymerisat aus Methymethacrylat (Schale) und Butylacrylat-Kautschuk (Kern, Pfropfgrundlage).

### b) Prüfmethoden

Die Bestimmung der **Schmelze-Volumenfließrate** (MVR) erfolgte nach ISO 1133:2012-03 (bei einer Prüftemperatur von 300 °C, Masse 1,2 kg) mit dem Gerät Zwick 4106 der Firma Zwick Roell. Zusätzlich wurde der MVR-Wert nach 20 Minuten Vorwärmzeit gemessen (IMVR20'). Dies ist ein Maß für die Schmelzestabilität unter erhöhtem thermischem Stress.

Die Bestimmung des **Asche-Gehaltes** erfolgte nach DIN 51903:2012-11 (850°C, 30 min halten).

Der **Yellowness-Index** (Y.I.) wurde nach ASTM E 313-10 (Beobachter: 10° / Lichtart: D65) bestimmt.

Es wurde außerdem die Brennbarkeit der untersuchten Proben beurteilt und klassifiziert, und zwar nach **UL94.** Dazu wurden Probenkörper der Abmessung 125 mm x 13 mm x d(mm) hergestellt, wobei dabei die Dicke d der kleinsten Wandstärke in der vorgesehenen Anwendung entspricht. Eine V0-Klassifizierung bedeutet, dass die Flamme nach maximal 10 s von selbst erlischt. Ein brennendes Abtropfen tritt nicht auf. Ein Nachglimmen nach der zweiten Beflammung erfolgt für maximal 30 s.

Die **Vicat-Erweichungstemperatur VST/B50** als Maß für die Wärmeformbeständigkeit wurde gemäß ISO 306:2013 an Prüfkörpern der Abmessung 80 mm x 10 mm x 4 mm mit einer Stempellast von 50 N und einer Aufheizgeschwindigkeit von 50°C/h mit dem Gerät Coesfeld Eco 2920 der Firma Coesfeld Materialtest bestimmt.

Die **Izod-Kerbschlagzähigkeit** wurde nach ISO 180:2019 an 80 mm x 10 mm x 3 mm Normprüfstäben bestimmt.

Die Musterplatten wurden jeweils durch Spritzguss hergestellt.

Vergleichsversuche sind in den nachfolgenden Tabellen mit "V" gekennzeichnet, erfindungsgemäße Versuche mit "E".

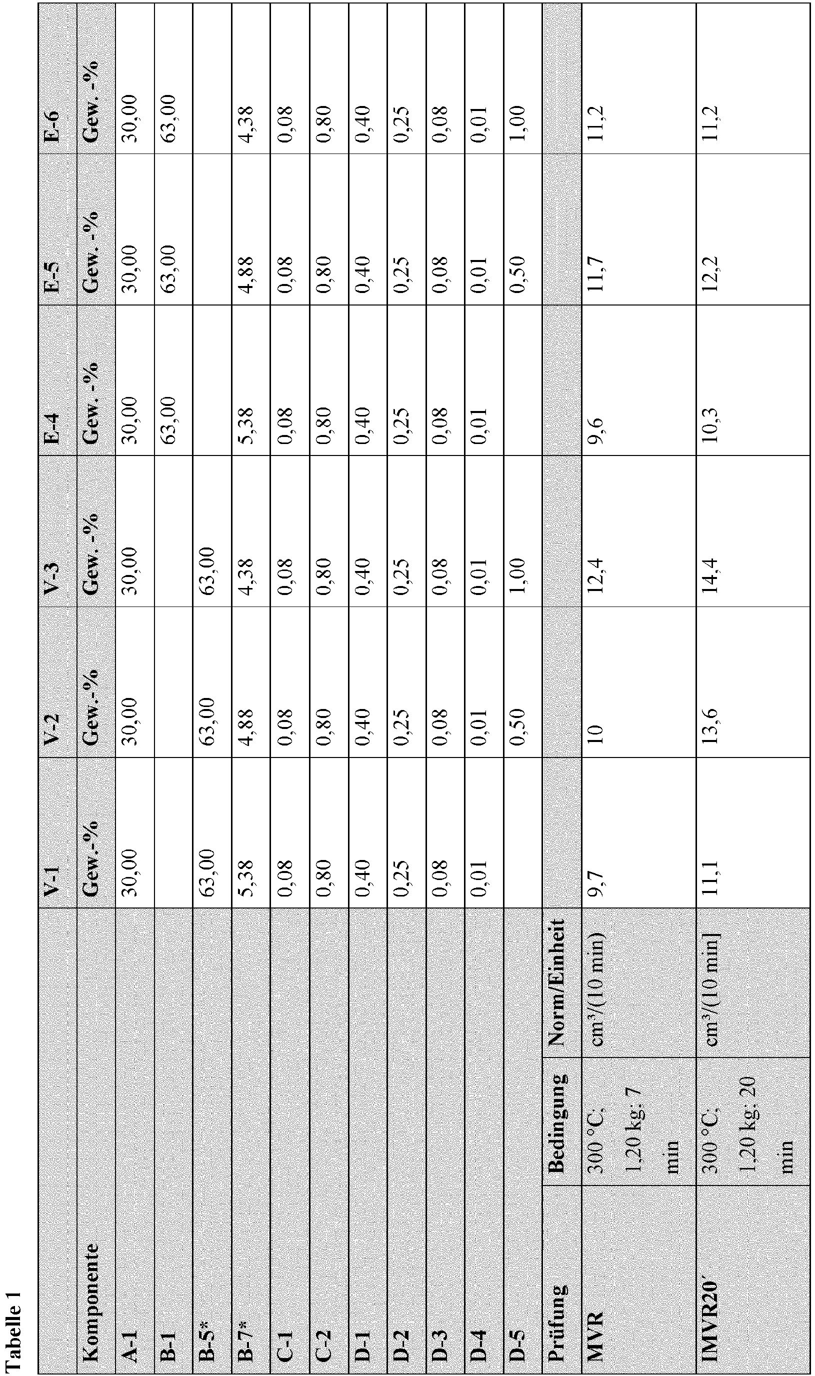

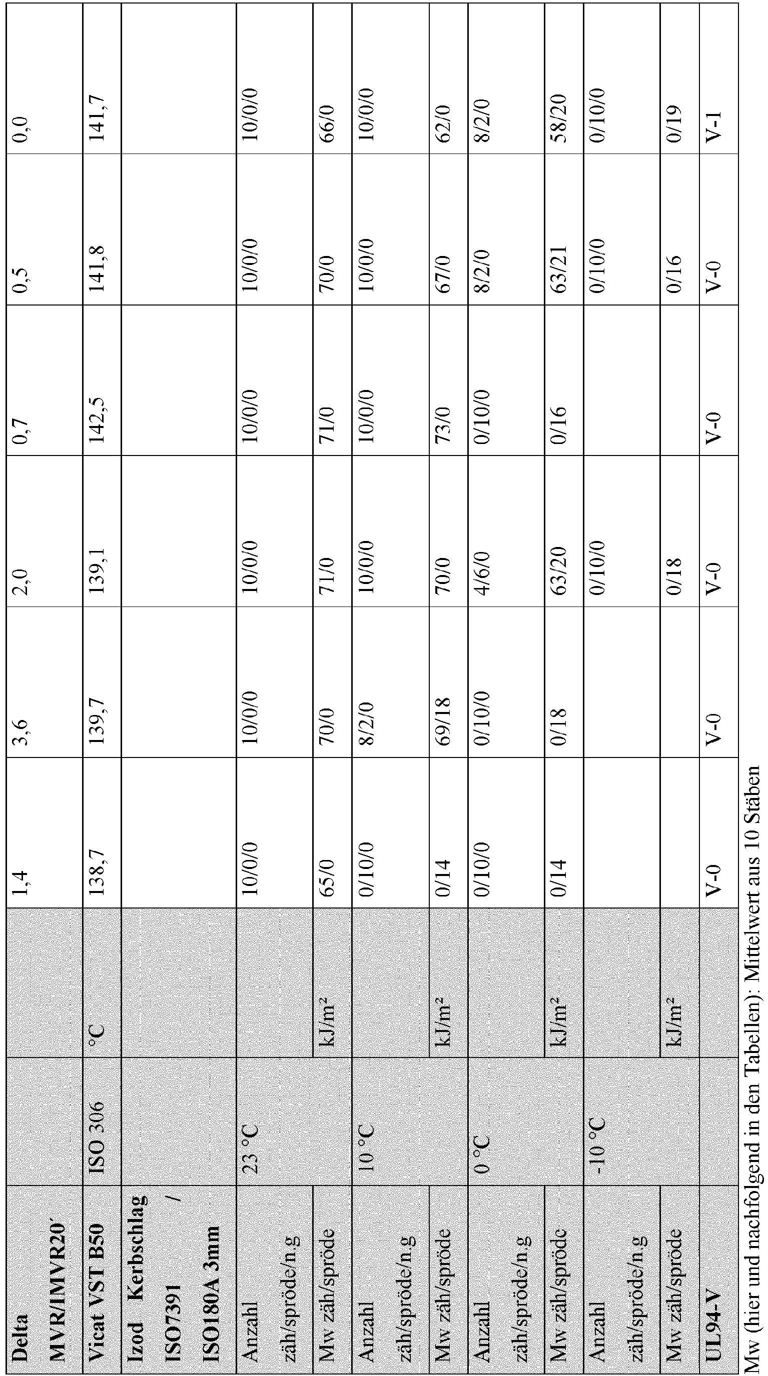

Der Einsatz von Komponente B-1 führt im Vergleich zu Komponente B-5* zu einer Verbesserung der thermischen und mechanischen Eigenschaften. Die Zähigkeit wird ohne Zugabe von Schlagzähmodifikator D-5 verbessert, die Vicat-Temperatur steigt deutlich an. Das Brandverhalten bleibt nahezu unverändert gut.

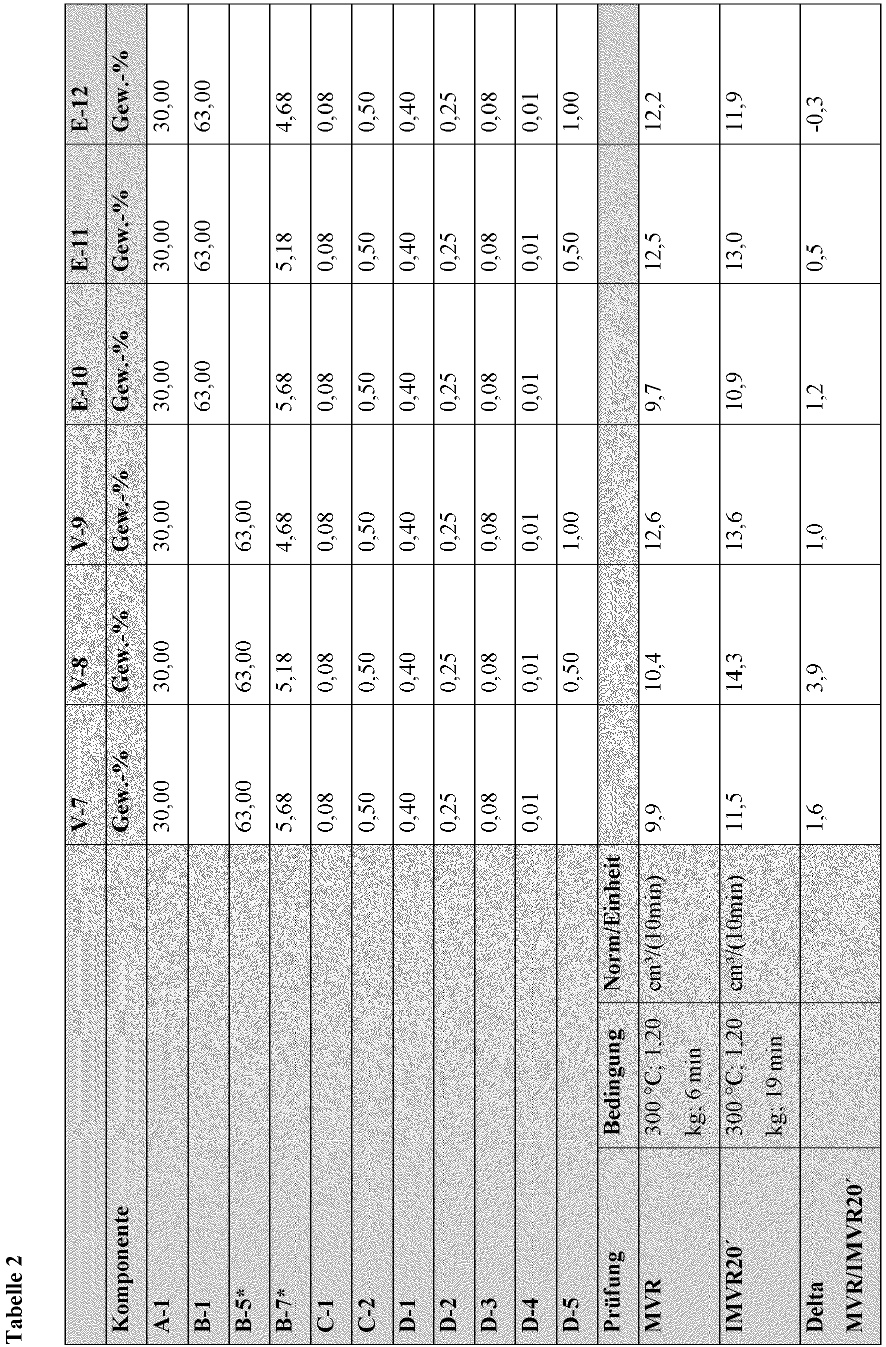

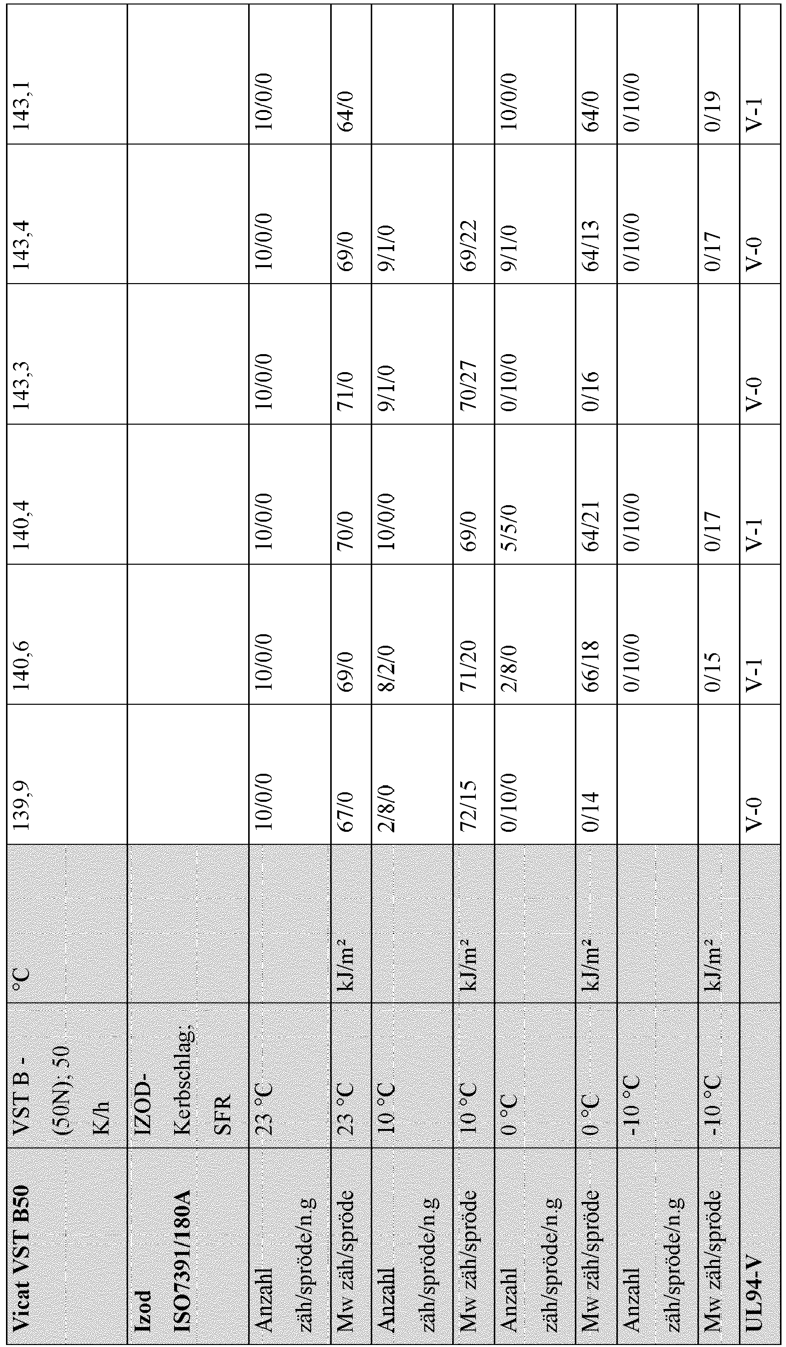

Der Einsatz von Komponente B-1 führt im Vergleich zu Komponente B-5* zu einer Verbesserung der thermischen und mechanischen Eigenschaften. Die Zähigkeit wird ohne Zugabe von Schlagzähmodifikator D-5 verbessert, die Vicat-Temperatur steigt deutlich an. Das Brandverhalten wird teilweise verbessert.

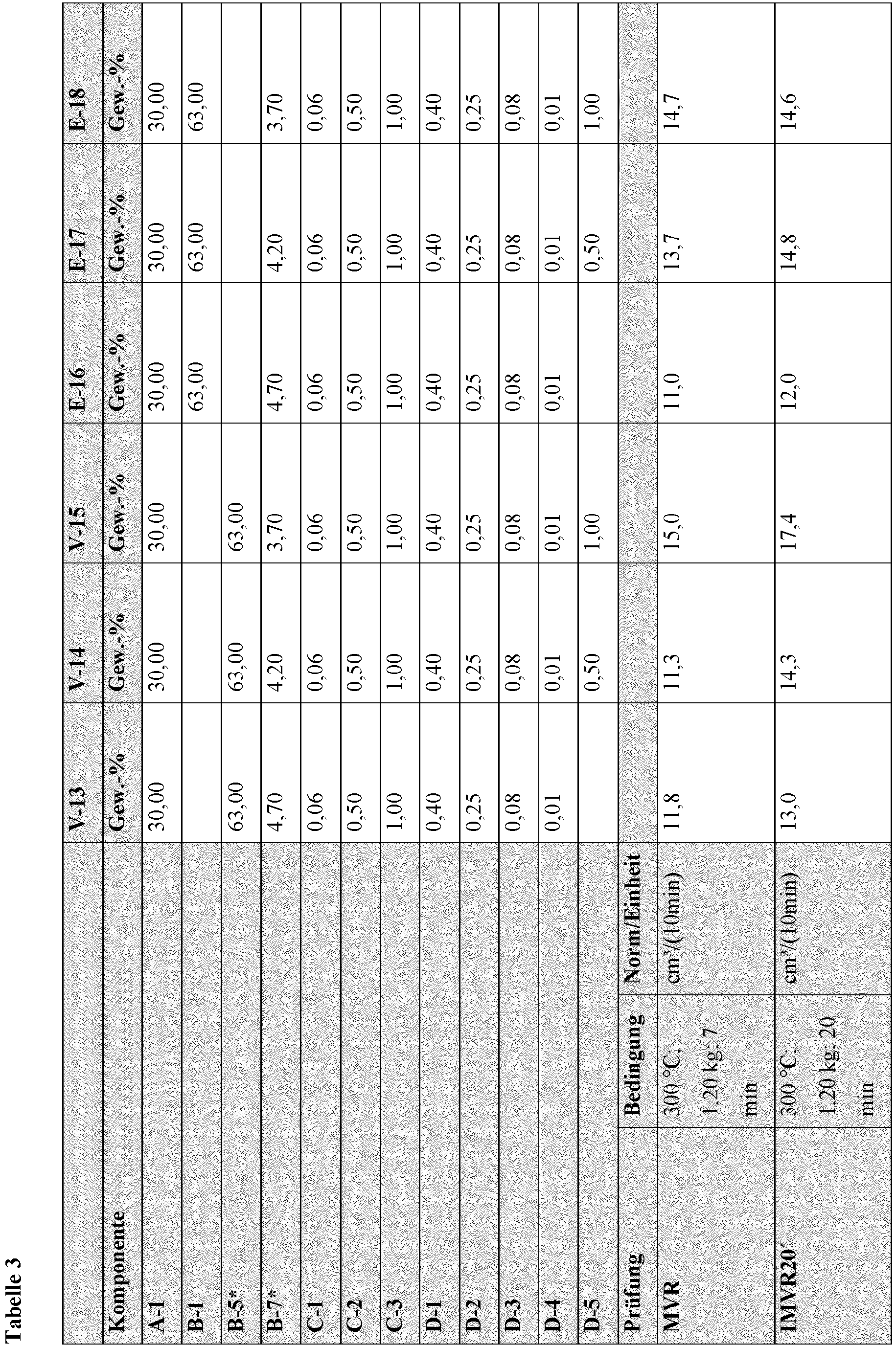

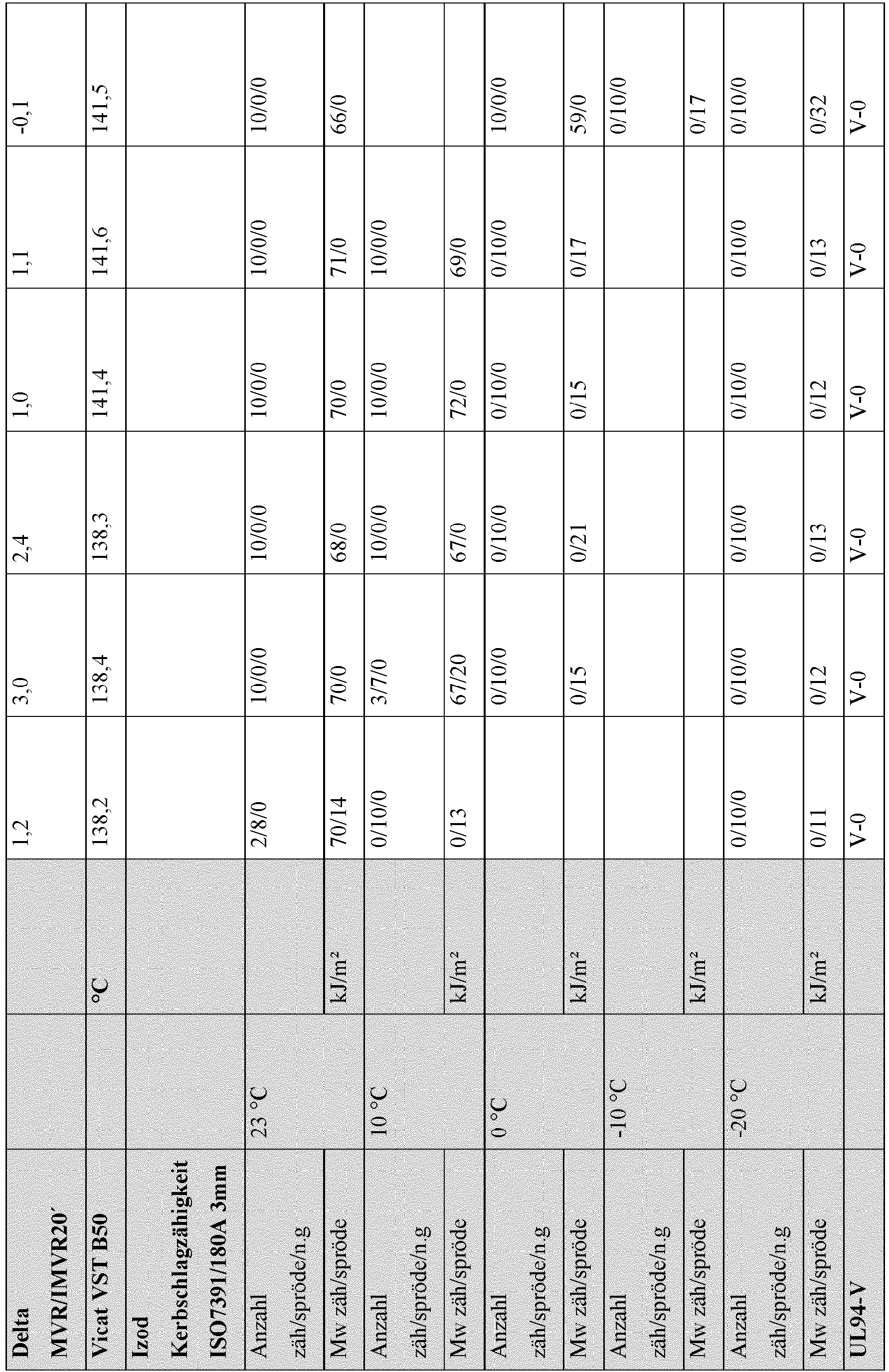

Der Einsatz von Komponente B-1 führt im Vergleich zu Komponente B-5* zu einer Verbesserung der thermischen und mechanischen Eigenschaften. Die Zähigkeit wird ohne Zugabe von Schlagzähmodifikator D-5 verbessert, die Vicat-Temperatur steigt deutlich an. Das Brandverhalten bleibt unverändert gut.

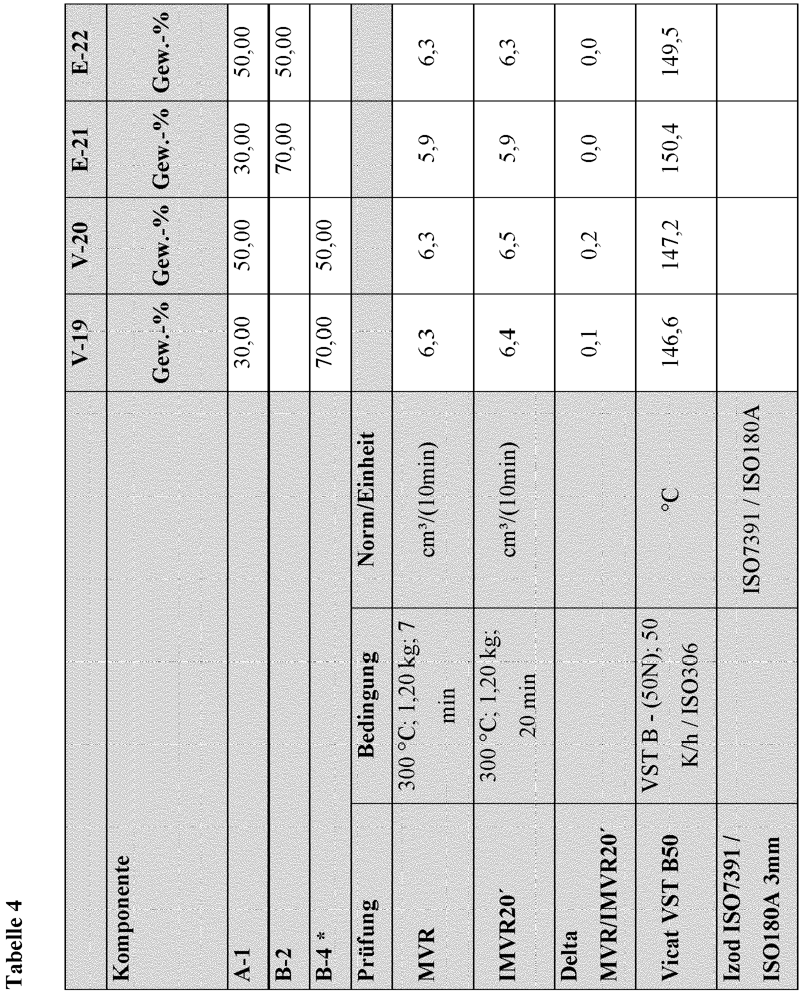

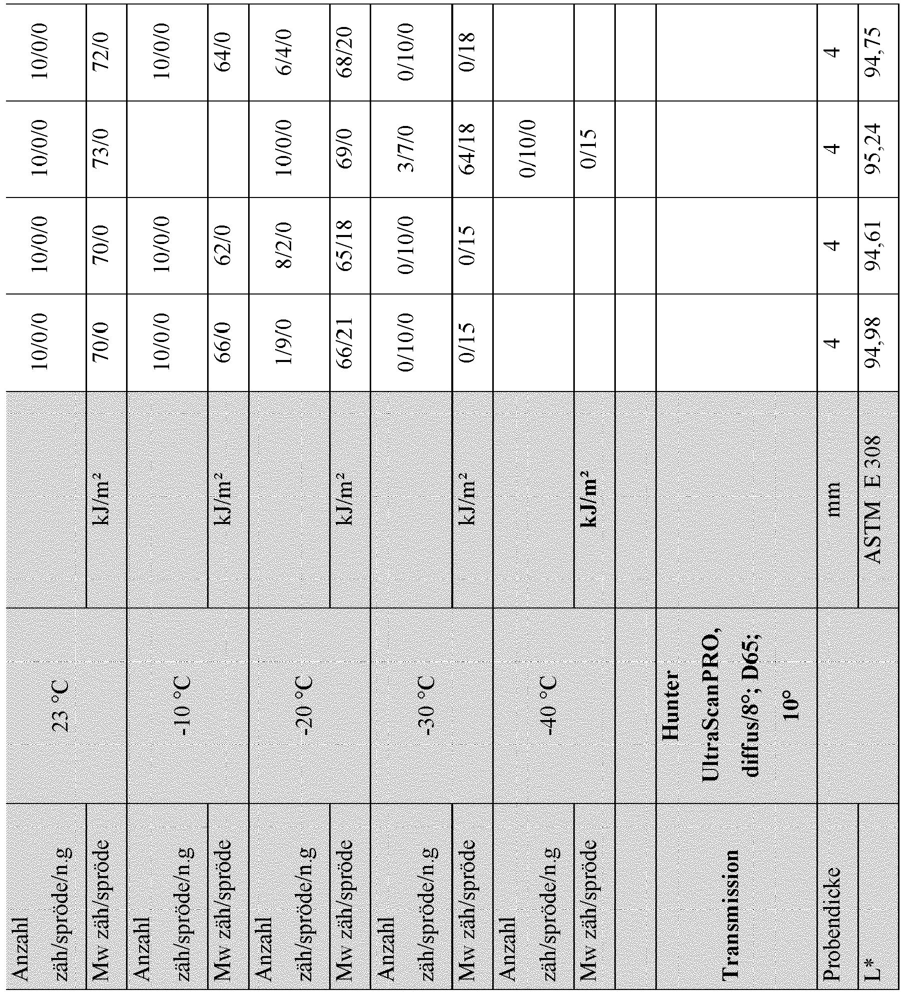

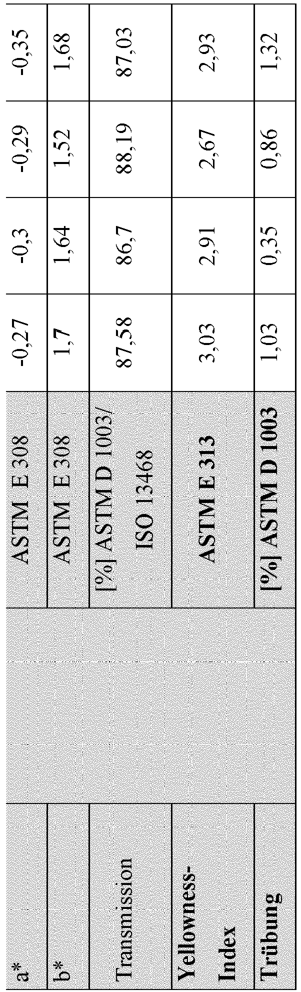

Der Einsatz von Komponente B-2 führt im Vergleich zu Komponente B-4* zu einer Verbesserung der thermischen und mechanischen Eigenschaften. Die Zähigkeit wird verbessert, die Vicat-Temperatur steigt deutlich an. Das optischen Eigenschaften sind verbessert.

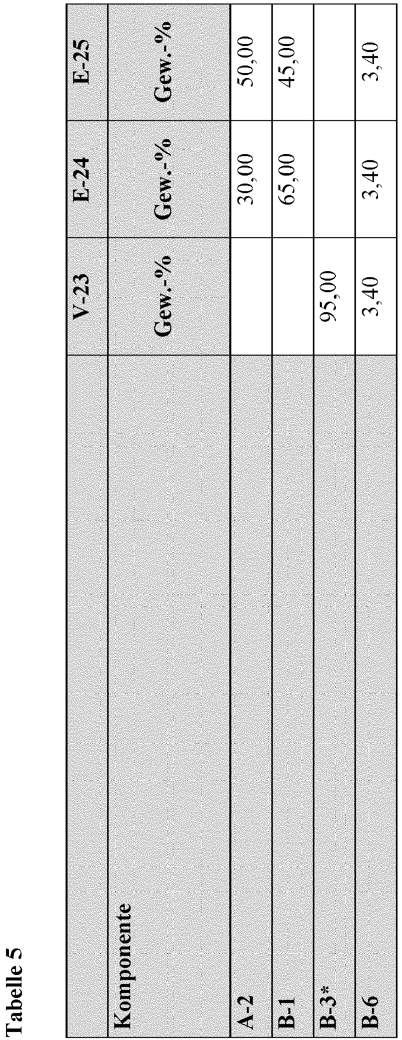

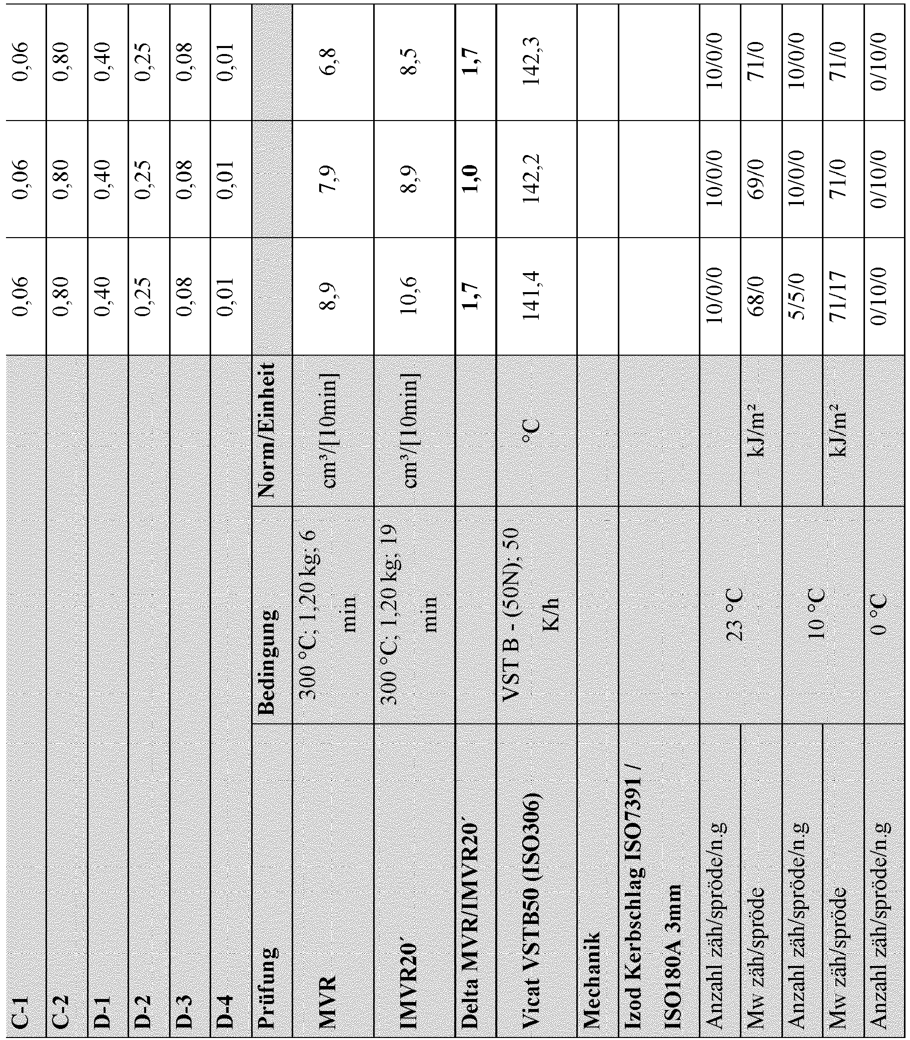

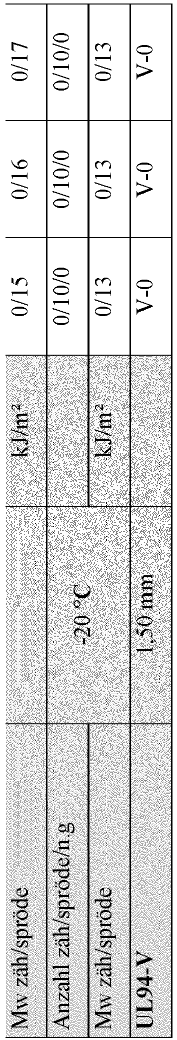

Der Einsatz von Komponente B-1 führt im Vergleich zu Komponente B-3* zu einer Verbesserung der thermischen und mechanischen Eigenschaften. Die Zähigkeit wird verbessert, die Vicat-Temperatur steigt deutlich an. Das Brandverhalten bleibt unverändert gut.

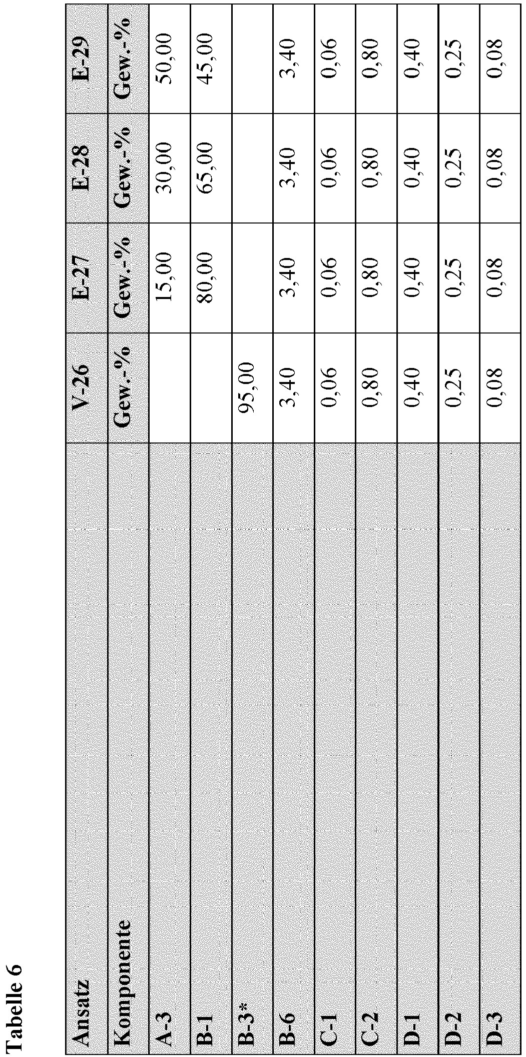

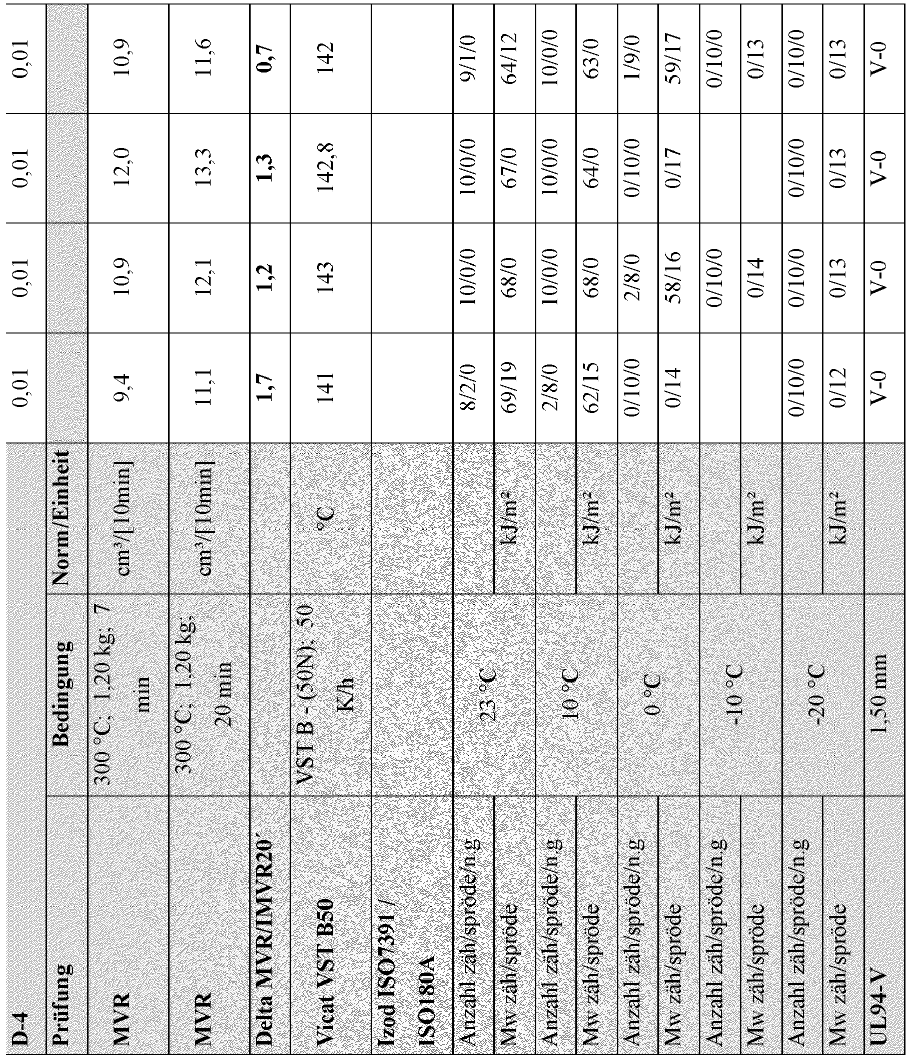

Der Einsatz von Komponente B-1 führt im Vergleich zu Komponente B-3* zu einer Verbesserung der thermischen und mechanischen Eigenschaften. Die Zähigkeit wird verbessert, die Vicat-Temperatur steigt deutlich an. Das Brandverhalten bleibt unverändert gut.

In den folgenden Tabellen 7 bis 9 wird gezeigt, dass Recyclate alleine über schlechtere Eigenschaften als die Primärprodukte verfügen.

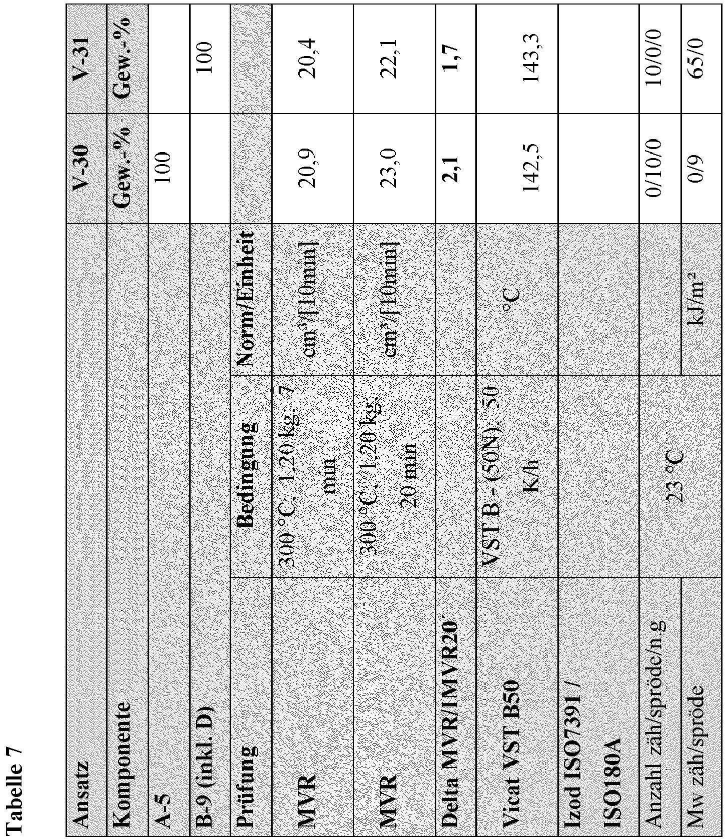

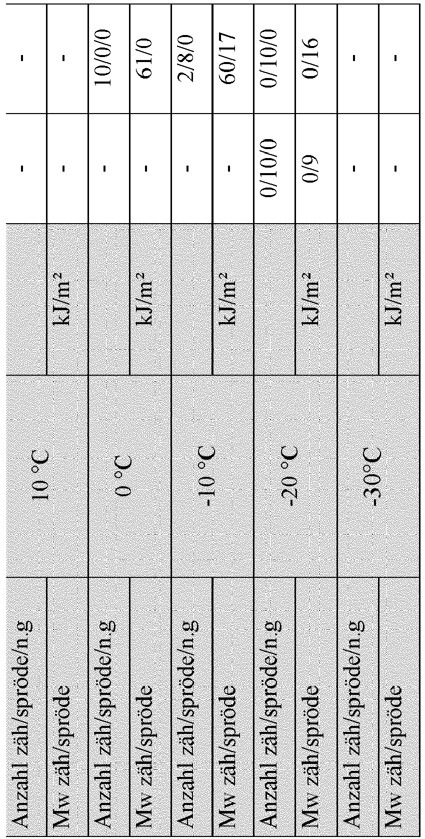

Das mechanisch recycelte Polycarbonat aus V-30 hat eine niedrigere Vicat-Temperatur und zeigt bereits bei Raumtemperatur ausschließlich sprödes Verhalten im Gegensatz zum Polycarbonat-Primärprodukt aus V-31.

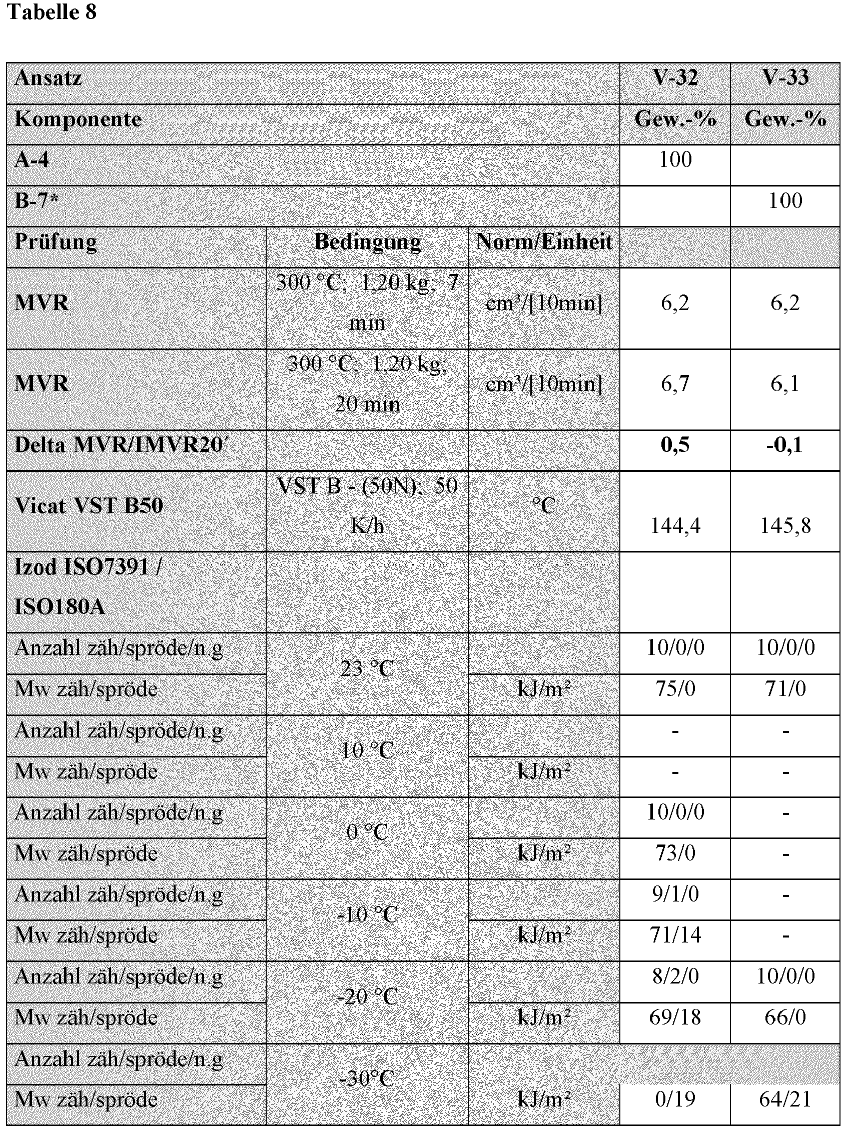

Das mechanisch recycelte Recyclat aus V-32 hat eine niedrigere Vicat-Temperatur als das vergleichbare Polycarbonat-Primärprodukt aus V-33 und zeigt bereits bei Raumtemperatur ausschließlich sprödes Verhalten.

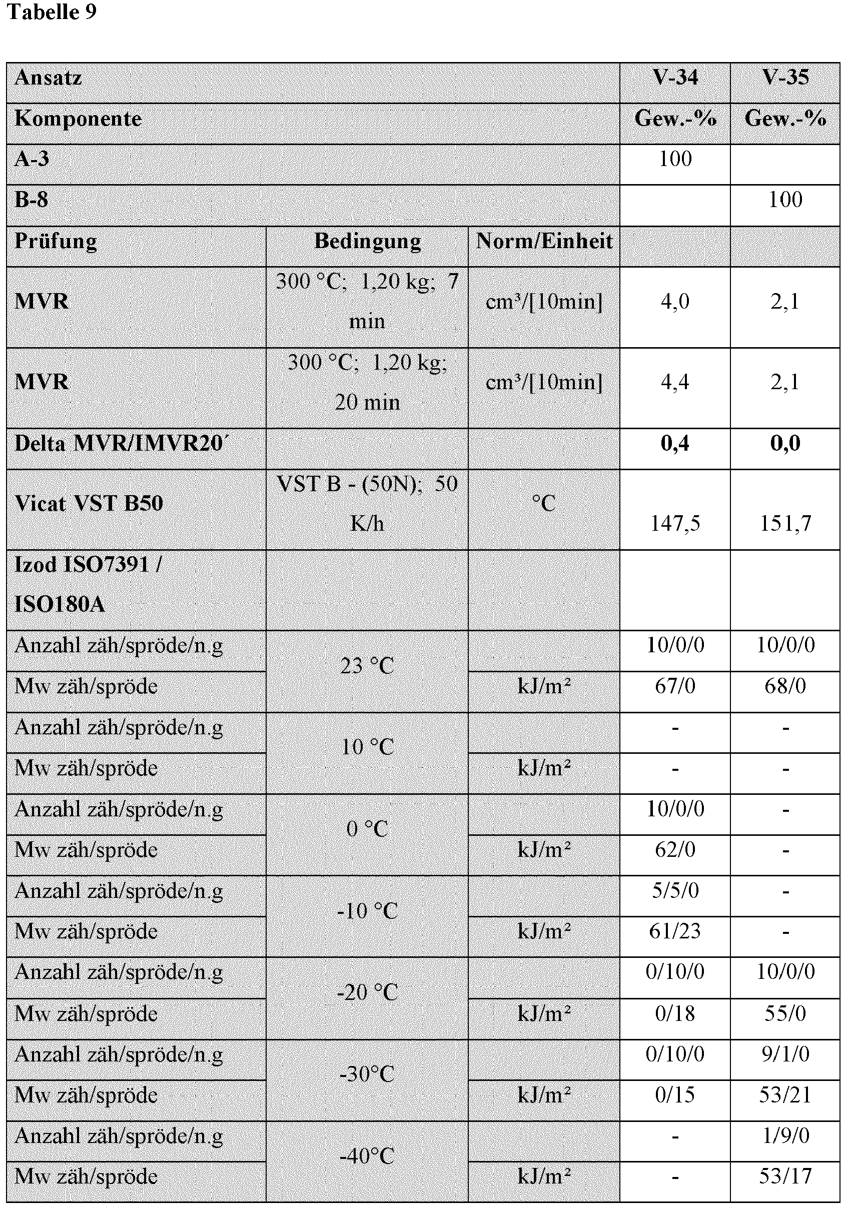

Das mechanisch recycelte Polycarbonat aus V-34 hat eine niedrigere Vicat-Temperatur als das vergleichbare Polycarbonat-Primärprodukt aus V-35 und zeigt bereits bei Raumtemperatur ausschließlich sprödes Verhalten.

## Patentansprüche

1. Verwendung von Alkylphenol-terminiertem aromatischem Polycarbonat-Primärprodukt zur Verbesserung der Schlagzähigkeit von Polycarbonat-Zusammensetzungen, enthaltend mechanisch recyceltes aromatisches Polycarbonat.

2. Verwendung nach Anspruch 1, wobei A) 10 bis 80 Gew.-% mechanisch recyceltes Polycarbonat und B) 20 bis 90 Gew.-% Alkylphenol-terminiertes aromatisches Polycarbonat-Primärprodukt, bezogen auf das Gesamtgewicht der resultierenden Zusammensetzung, eingesetzt werden.

3. Verwendung nach Anspruch 1 oder 2, wobei A) 12 bis 55 Gew.-% mechanisch recyceltes Polycarbonat und B) 45 bis 88 Gew.-% Alkylphenol-terminiertes aromatisches Polycarbonat-Primärprodukt, bezogen auf das Gesamtgewicht der resultierenden Zusammensetzung, eingesetzt werden.

4. Verwendung nach einem der Ansprüche 2 oder 3, wobei Komponente B tert.-Butylphenol-terminiertes aromatisches Polycarbonat ist.

5. Verwendung nach einem der Ansprüche 2 bis 4, wobei Komponente A eine Schmelzevolumenfließrate MVR von 2 bis 50 cm³/(10 min), bestimmt nach ISO 1133:2012-03 bei einer Prüftemperatur von 300 °C, Masse 1,2 kg, und Komponente B eine Schmelzevolumenfließrate MVR von 2 bis 36 cm³/(10 min), bestimmt nach ISO 1133:2012-03 bei einer Prüftemperatur von 300 °C, Masse 1,2 kg, aufweist.

6. Verwendung nach einem der Ansprüche 2 bis 5, wobei von Komponente A im Rahmen des Recyclings ggf. vorhandene Lackschichten entfernt wurden.

7. Verwendung nach einem der Ansprüche 2 bis 6, wobei Komponente A frei von Lackanteilen ist.

8. Verwendung nach einem der Ansprüche 2 bis 7, wobei als Komponente A 15 bis 50 Gew.-% mechanisch recyceltes Polycarbonat mit einer MVR von 3 bis 36 cm³/(10 min), bestimmt nach ISO 1133:2012-03 bei einer Prüftemperatur von 300 °C und einer Masse von 1,2 kg, und als Komponente B 50 bis 85 Gew.-% Alkylphenol-terminiertes aromatisches Polycarbonat-Primärprodukt mit einer MVR von 2 bis 24 cm³/(10 min), bestimmt nach ISO 1133:2012-03 bei einer Prüftemperatur von 300 °C und einer Masse von 1,2 kg, eingesetzt werden.

9. Verwendung nach einem der vorhergehenden Ansprüche, wobei Komponente B in einem kontinuierlichen Phasengrenzflächenverfahren hergestellt wurde.

10. Verwendung nach einem der vorhergehenden Ansprüche, wobei das mechanisch recycelte Polycarbonat recyceltes Wasserflaschenmaterial, recyceltes Gehäusematerial, recyceltes Platten- oder Folienmaterial, recyceltes Schokoladenformenmaterial, recyceltes optisches Datenträgermaterial, reyceltes Profilmaterial, Angussmaterial vom Linsenspritzguss, recyceltes Lampen- oder Scheinwerferabdeckungsmaterial, recyceltes Linsen- oder Brillenmaterial, recycelte (Automobil-)Scheinwerfermaterial, recyceltes Medicalproduktmaterial wie von Dialysatorgehäusen, Luer-Systemen, Hähnen oder Tuben und Verbindungsstücken, oder eine Mischung aus zwei oder mehr der vorgenannten Materialien ist.

11. Verwendung nach einem der Ansprüche 2 bis 10, wobei die Schlagzähigkeit der Komponente A durch bloßes Compoundieren mit der Komponente B verbessert wird.

12. Verwendung nach einem der vorhergehenden Ansprüche, wobei es sich bei der Schlagzähigkeit um die Izod-Kerbschlagzähigkeit, bestimmt nach ISO 180:2019, handelt.

13. Verwendung nach einem der vorhergehenden Ansprüche, wobei das mechanisch recycelte Polycarbonat eine Lichttransmission im VIS-Bereich des Spektrums (380 bis 780 nm) von mehr als 70 % (Transmissionsgrad T_{VIS}), bestimmt nach DIN ISO 13468-2:2006 (D65, 10°, Schichtdicke der Musterplatte: 4 mm), und bevorzugt eine Trübung von weniger als 10 %, bestimmt nach ASTM D1003:2013 bei einer Schichtdicke von 2 mm, aufweist.

14. Verwendung nach einem der Ansprüche 2 bis 13, wobei zusätzlich zu dem Alkylphenolterminierten aromatischen Polycarbonat Phenol-terminiertes aromatisches Polycarbonat zugemischt wird.

15. Verwendung nach einem der Ansprüche 2 bis 7 und 9 bis 14, wobei Komponente A eine Schmelzevolumenfließrate MVR von 3 bis 9 cm³/(10 min), bestimmt gemäß ISO 1133:2012-03 bei einer Prüftemperatur von 300°C und 1,2 kg Belastung, aufweist.
